# EUROPEAN PATENT SPECIFICATION

(11) **EP 0 749 077 B1**
(45) Date of publication and mention of the grant of the patent: **08.03.2006**
(21) Application number: 96109313.5
(22) Date of filing: 11.06.1996
(51) Int. Cl.: G06F 17/30

(54) **Document management device**
Dokumentverwaltungsgerät
Dispositif de gestion de documents

(30) Priority: 12.06.1995 JP 14475195; 28.05.1996 JP 13368496
(43) Date of publication of application: 18.12.1996
(73) Proprietor: FUJI XEROX CO., LTD., Tokyo 107 (JP)
(72) Inventor: Hayashi, Koichi, Ashigarakami-gun, Kanagawa (JP); Sekijima, Akifumi, Ashigarakami-gun, Kanagawa (JP)
(74) Representative: Hoffmann, Eckart

(56) References cited:
- EP-A- 0 326 162

## Description

The invention relates to a document management device, which manages documents by utilizing additive information.

In general investigation activity, a series of procedures, such as collection of reference materials, evaluation of each reference material and utilization of evaluation result are performed. Information given as an evaluation result for a reference can include: a decision whether an evaluation is necessary; evaluation of a value such as importance; comments regarding contents; or the like. Selecting, sorting and creating a visual presentation of references are performed utilizing the given evaluation information.

Evaluation information for a reference is not information originally accompanying the reference, but it is information reflecting the viewpoint or criteria of an evaluator. There is a criteria or purpose for an evaluation, and the evaluation information is given in response to the criteria or purpose. Also, the evaluation may vary depending on differences in the evaluator or the evaluation date. Consequently, when selecting or sorting of references is performed using evaluation information, it is preferable that information regarding the evaluation viewpoint, such as the criteria of evaluation, purpose, evaluator, and evaluation date, be clear.

In many cases, an investigation covering specific references is not sufficient. References provided by unlimited range of information sources should be covered. For example, when information for a patent is investigated, not only documents of a patent gazette, but information such as a treatise, an article in a newspaper or a magazine, and a catalog of products, must be investigated.

In recent years, a database device for managing documents and a device for creating charts using data stored in the database have been developed. Consequently, if reference data and evaluation information can be input in a database, a series of procedures from collection of references to utilization of evaluation information can be achieved. In order to perform such a series of works, as the following criteria should be satisfied:
(1) The evaluation information can be attached to references by a simple operation.
(2) The viewpoint the evaluation can be simply defined and utilized.
(3) Various types of reference materials can be covered for an evaluation.

Regarding criteria to be satisfied, the prior methods and devices and their problems will now be described. First, a method that simply and freely supplies reference data with the evaluation information is described. Difficulty in evaluating references is a problem, not only for electronically inputting information but also for inputting information using paper. The evaluation of references will be described using references of paper.

Evaluation of references and utilization of the evaluation results is not always simultaneously performed. For example, before analyzing collected documents, some evaluation of any results must be registered. Also, when the evaluation is performed by several persons, the evaluation results of each person must be gathered before discussing and comparing. Thus, in investigation activity, a relationship between a reference and its evaluation information must be maintained separate from the evaluation of the reference result.

When using a paper reference for supplying the evaluation information, a memo having specific meaning, or a memo with the evaluation information written therein may be attached to a reference or a list of reference names. For example, a reference and evaluation information may be recorded in a separate management ledger. Alternatively, the evaluation information is written directly in the reference. In using a management ledger, the reference and evaluation information must be accessed every time. Thus, this work is troublesome. Also, since the evaluation information is different from the reference information and the evaluation information may also be changed, it is not preferred that the evaluation information be written directly in the reference.

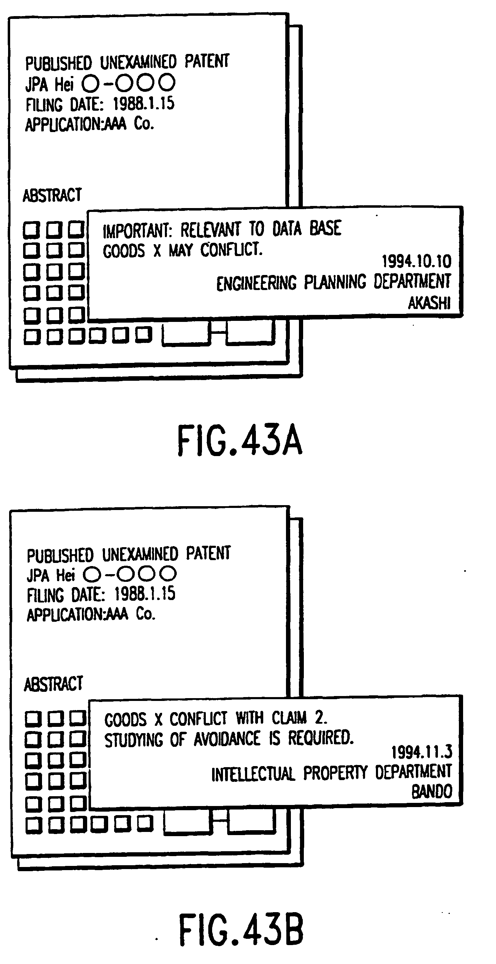

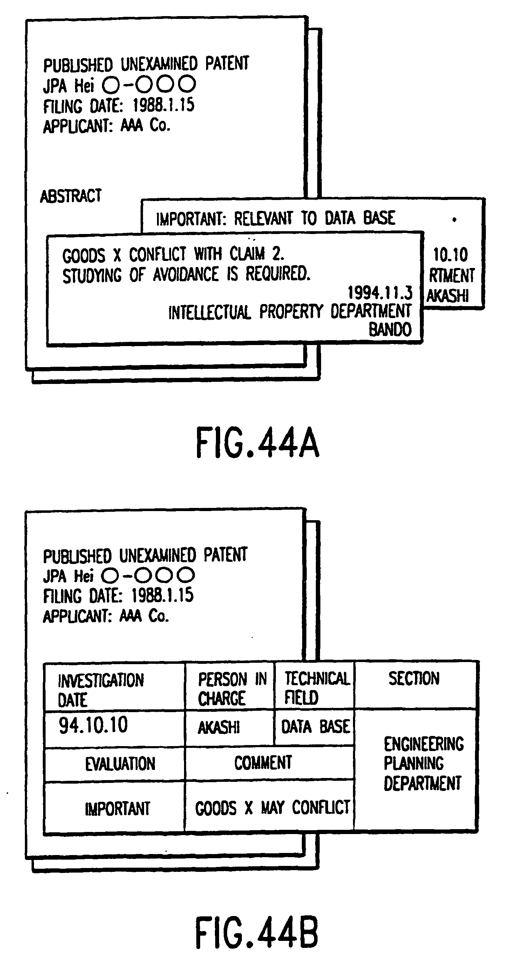

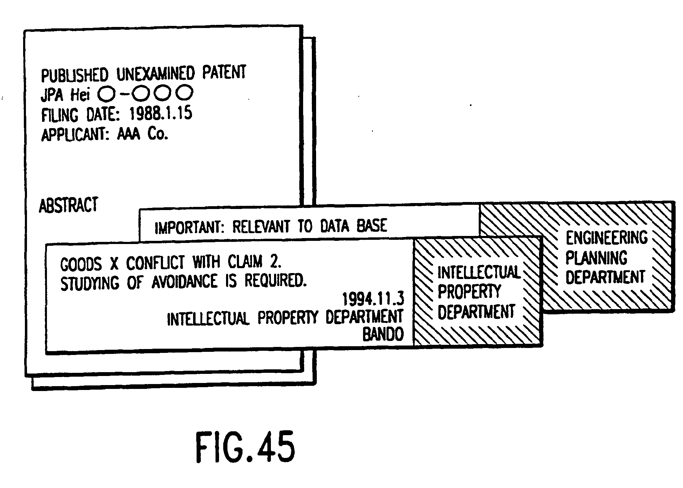

Figs. 43(A) through Fig. 46(B) are diagrams for memo attaching. Figs. 43(A) through Fig. 45 show an image of memo attaching. Figs. 43(A) and 43(B) show memos giving different decisions of an evaluation of a same reference. Fig. 44(A) shows that plural memos can be simultaneously attached to one reference. Fig. 44(B) shows that various columns can be previously provided on a piece of paper for a memo to be attached to a reference. Fig. 45 shows that different pieces of paper for a memo can be used, and the evaluation information can be commonly used in plural departments.

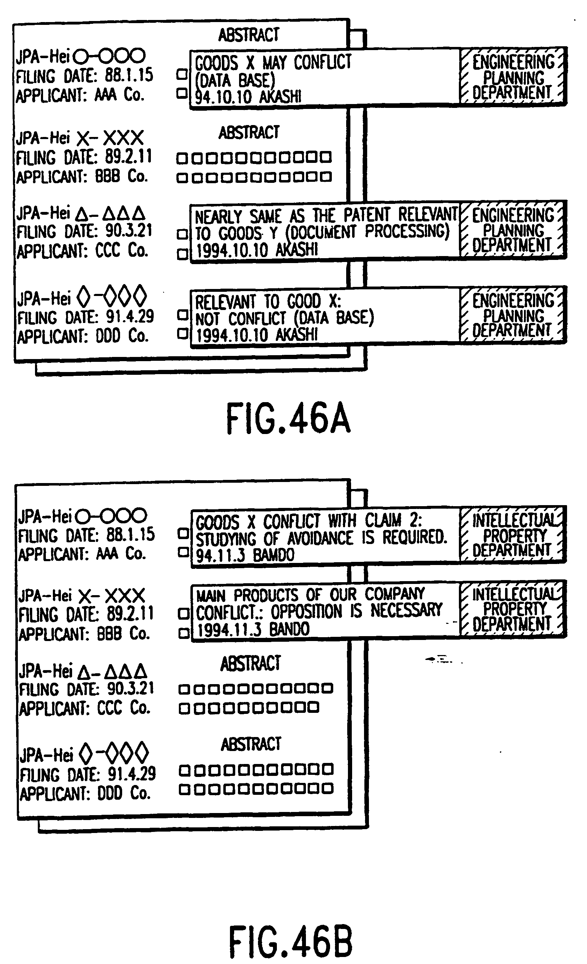

The attaching of a memo is not limited to a memo directly attached to a reference. For example, in Figs. 46 (A) and 46(B), memos can be attached to a list of references. Here, memos are attached where corresponding references can specify a relationship between a reference and a memo. Thus, the memos can be attached for various purposes and configurations.

To attach memos, the reference and memo can be independent media. Since this method is characterized in that relating the reference and memo can be performed by coupling both, there are advantages as follows:

First, since the reference and memo are independent media, it can be easily determined whether evaluation information exists. Therefore, the loss of evaluation information can be prevented. Also, content of the evaluation information and original reference can be easily distinguished. Further, since it can be easily determined by a person, other than the evaluator, whether evaluation information exists, evaluation information can be commonly used between plural persons.

Further, evaluation information, that is a result of reading a reference can be related to the reference by attaching a memo directly to the reference, without accessing a management ledger or like. Also, as compared to writing on the reference, if a coupling between a reference and memo is eliminated, the accessing can be eliminated. Thus, this method is advantageous in that evaluation information can be easily supplied.

Thus, by attaching a memo independent of reference data, evaluation information can be easily and freely supplied. However, this can be performed on paper. Consequently, the information need not be input in electronic form, and computer processing utilizing the supplied evaluation information need not be performed.

In order to effectively utilize a memo, a memo may be electronically converted. For example, Japanese Patent Publication No. 1-18470 (JP 470) discloses supplying memo information in image form to a document stored in a specific document database. Japanese Patent No. 6-236409 (1994) discloses a document image filing device where a user can insert a handwritten memo into a document image. Afterwards, the document image with the memo can be retrieved independent of an existing memo. However, retrieval by attaching a memo is limited based on whether the memo exists. Also, since only handwritten image information is used as information in a memo, retrieval and utilization of the memo, for example, by the above-mentioned evaluation information, becomes difficult.

Japanese Patent No. 5-2584 (JP 584) discloses a device where memo information can be held, not as image, but as text. In JP 584, memos in various forms including comment by text can be added within a document. In Japanese Patent Laid-Open No. 5-165829 (JP 829), edit comments described in text information can be written in a memo, which may be attached or detached to a portion requiring editing within a document. Thereby, editing is facilitated in these devices. A memo that contains text information reduces the difficulty in information input operation. The information that is written in the memo can be used for displaying the information, together with document data.

Some systems intend sequential access of data with a tag attached. This is known as tag turning. Japanese Patent No. 7-56934 (JP 934), discloses plural tags used for different tag turning. In this system, tag information can possess the attribute information, which is capable of setting not only the type information but the order using such information. Thus, database access can be controlled. However, the tag used in JP 934 has a simple structure, and can only provide simple retrieval functions. This is insufficient to access data in order.

Next, applying an evaluation to the accessed data will be defined and utilizing the data will be described. Evaluation information for a reference is not essential information accompanying the reference, but reflects a viewpoint or criteria of an evaluator. In other words, the information has a subjective value that does not exist in the original reference. Supply of the evaluation information is performed, for example, by attaching a memo. It is preferable that the evaluation information described in a memo be effectively utilized.

Since the reference and memo are media independent of each other, prescribed columns may be provided on paper for a memo, and an evaluation method can be used. Using the same paper for a memo, the evaluation method can be independently standardized. Conversely, by using plural memos, the evaluation information for plural evaluation standards can be attached.

The attaching of a memo is used, not only in the investigation activity, but also in office activity. For example, a work command can be described in a memo and attached to a document. Also, the content of a memo need not accompany the document, it can be other information but does not exist separate from the document.

The evaluation information is information supplied from the viewpoint of the evaluator, and does not accompany the original document. Consequently, the manner of providing columns in the memo reflects the evaluator's importance of the information. Memo columns are provided by the evaluator, thereby information describing the evaluation, such as purpose order, evaluator and evaluation date, can be inserted. Thus, if common memo structures, i.e., independent of reference data, are prepared, evaluation information can be provided under a uniform standard, even though types or locations of primary information differs.

As long as information regarding columns of the memo is expressed on a paper medium, it can guide the input information to the evaluator. Also, there may be a problem that the writing of the information by the evaluator every time is cumbersome.

A document creation/management system is described Japanese Patent No. 4-80871 (JP 871). In JP 871, a user inputs information indicating the document and its attribute data by filling a field accompanying the document. The document is then registered in a database. According to this system, the user need not be conscious of operation of the database, and only writes prescribed data in the document. Thereby, the database can be registered.

Attribute information can be used in place of a memo. A user can thus input the necessary data in the database, where the management method is determined in each sort of the document. Each document has one set of the attribute fields to register the information for the document. A user cannot register various evaluation information in the document.

Further, evaluation information, i.e., a comment can be attached to various reference data. Where the evaluation information is supplied to image data, only specifically prepared document data in a document management database is available for evaluation purposes. The systems are substantially the same as in JP 409, JP 584, JP 829, JP 934 and JP 871, above described. However, these systems are not suitable for investigation of large amounts of activity, and various types of diverse information source reference data, because all usable data cannot be registered into an internal database.

Recent progress of computer networks, for example, the Internet, makes it possible to access to various world-wide information resources through a computer. Treating reference data in various information sources, a global information system, for example, World Wide Web (WWW) has been developed based on hypertext. In the WWW, based on a server-client model, data can be sent or received between a server managing a document and a client retrieving the document according to a request of a user.

The document stored in the server can be supplied with, i.e., a URL or Universal Resource Locator, a unique identifier for specifying the document, for transmission/reception of data. Since the URL includes server information where the document is stored, if a client assigns the URL, the server can be specified and accessed. Thus, the document can be retrieved.

A document in the WWW is a hypertext, described generally in a format called HTML or HyperText Markup Language. In the HTML, tags constituted by the special strings are embedded within the document. Thereby, a document format form or link of the hypertext can be expressed. A link is expressed using the URL as a document stored in another server as a reference destination of the link. Consequently, in the WWW framework, a hypertext network extending over a plurality of servers can be constructed.

A client of the WWW that supplies comments to documents in a HTML, which is data managed by such various information sources. Mosaic has been developed in NCSA of Illinois University (see, for example, "NCSA Mosaic Technical Summary 2.1," 1993) for this purpose. If a user uses the Mosaic accesses a document on the WWW, and enters a command to supply a comment, a file corresponding to comment content to the URL of the document can be created.

Next, when the document is displayed in Mosaic, a link that represents a comment not existing in the original document, is displayed at the end of the document. If the user accesses the link representing the comment, the content of the comment is read from the associated file, and displayed on the screen.

EP 0 326 162 discloses a data management method and a system that allow users to create personal and private information about a certain document and to attach such information as a memo to the respective document. The memos are stored in a memo file in the user's workstation. All memos that may relate to various different documents are stored in a sequential order in this memo file. Pointers are additionally stored in the memo file to allow keeping track of respective sequences of memos that relate to the same document. Associated with each memo is stored in the memo file a pointer (primary key) into the database that holds the document to which the respective memo relates. This pointer is thus binding information that binds the memo to a document. The user's memos have no fixed data structure (format) and, therefore do not allow any kind of standardized evaluation of documents.

Although the comment attached to various reference data can be accessed, the given comments are referred only in a procedure, which first accesses the reference data and then displaying comments related to the data. This method does not access attached comments to reference data from various viewpoints and manage reference data by using any attached comments.

In summary, existing devices do not allow definition of evaluation information, based on a user's viewpoint; attaching evaluation information to various reference data at will by a simple operation; and manage reference data by using related evaluation information.

In view of the above-mentioned circumstances, an object of the invention is to provide a document management device where an advantage of a memo attaching method can be utilized so a user can register document information in various forms in a simple operation. Such information can be effectively utilized in document management, for example, arrangement, sorting and retrieval of documents.

More generally, when handling an original document as primary information and any attached information, such as an evaluation result as secondary information, another aspect of the invention is to smoothly process information including defining relevant information as secondary information in documents managed as primary information from a user's viewpoint, and management of primary information using registered secondary information.

Another object of the invention is to maintain correspondence between primary and secondary information. This enables users to define evaluation information by a simple operation. Another aspect of the invention can be to enable users to prepare secondary information format attached to primary information to express a viewpoint of an evaluator. A further aspect of the invention enables users to uniformly manage primary information provided by various information sources from the viewpoint of an evaluator, by utilizing secondary information bound with primary information.

The above mentioned objects are solved by a document management device as claimed in claim 1 and a method as claimed in claim 10. Preferred embodiments of the invention are subject-matter of the dependent claims.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.
Fig. 1 is a block diagram showing an example of a document processing device according to one embodiment of a document management device;
Fig, 2 is a diagram showing relation of information managed in a document information management section and a document evaluation information management section;
Figs. 3(A)-3(C) are diagrams of a relationship describing document dependent information and document evaluation information;
Fig. 4 is a diagram of a tag template;
Fig. 5 is a flow chart showing an example of definition processing of the tag template of the document management device;
Fig. 6 is a diagram of a display screen of a tool defining tag template;
Fig. 7 is a flow chart showing processing for preparation of an evaluation information input tool inputting evaluation information in the first embodiment of the document management device of the invention;
Figs. 8(A) and 8 (B) are diagrams of a display screen of an evaluation information input tool inputting evaluation information;
Figs. 9 (A) and 9 (B) are diagrams of another example of a display screen of an evaluation information input tool inputting evaluation information;
Fig. 10 is a diagram of data defining comment tag;
Fig. 11 is a flow chart of document list display processing;
Fig. 12 is a flow chart of tag figure preparation processing;
Fig. 13 is a diagram of a displayed document list and a tag template folder;
Fig. 14 is a diagram of display of a plurality of tag figures;
Fig. 15 is a diagram of a display of document data;
Fig. 16 is a diagram of another example of a display of document data;
Fig. 17 is a flow chart showing processing of a tag attachment and evaluation information update in the document management device;
Fig. 18 is a diagram of an operation to supply evaluation information to documents;
Fig. 19 is a diagram of retrieval result utilizing evaluation information;
Fig. 20 is a block diagram showing a document processing device to which a second embodiment of a document management device of the invention is applied;
Fig. 21 is a diagram showing a relationship of information managed in a document evaluation information management section and document data stored in WWW server;
Fig. 22 is a diagram of a display of document information and tag template;
Fig. 23 is a diagram of a display of document information and tag template;
Fig. 24 is a diagram of a display of document information and tag template;
Fig. 25 is a diagram of a data defining comment tag according to a second embodiment of the document management device;
Fig. 26 is a diagram of a relationship of document dependent information and document evaluation information;
Fig. 27 is a diagram of another relationship of document dependent information and document evaluation information;
Fig. 28 is a diagram of a display of document information and comment tag;
Fig. 29 is a diagram of another display of document information and comment tag;
Fig. 30 is a diagram of a display screen of a tool defining tag template;
Fig. 31 is a diagram expressing information regarding buying of fixtures;
Fig. 32 is a diagram of an example of a display of document information and comment tag;
Fig. 33 is a diagram of another example of a display screen of a tool defining tag template;
Fig. 34 is a diagram of expressing an information regarding schedule;
Fig. 35 is a diagram of another display of document information and comment tag;
Fig. 36 is a diagram of an HTML document;
Fig. 37 is a diagram of the HTML document in Fig. 36 displayed in a document information display window;
Fig. 38 is a diagram of a display of a comment tag attached to document referred to by a hyperlink;
Fig. 39 is a flow chart for the second embodiment of the document management device showing processing creating document information display with mark added to indicate attaching of comment tag to anchor and an example of processing of creating evaluation information corresponding to document data;
Fig. 40 is a continuation of the Fig. 39;
Fig. 41 is a diagram of creation of document data utilizing evaluation information;
Fig. 42 is a diagram of creation of document data utilizing evaluation information;
Fig. 43 is a diagram of memo attaching;
Fig. 44 is a diagram of memo attaching;
Fig. 45 is a diagram of yet another example of memo attaching; and
Fig. 46 is a diagram of another example of memo attaching.

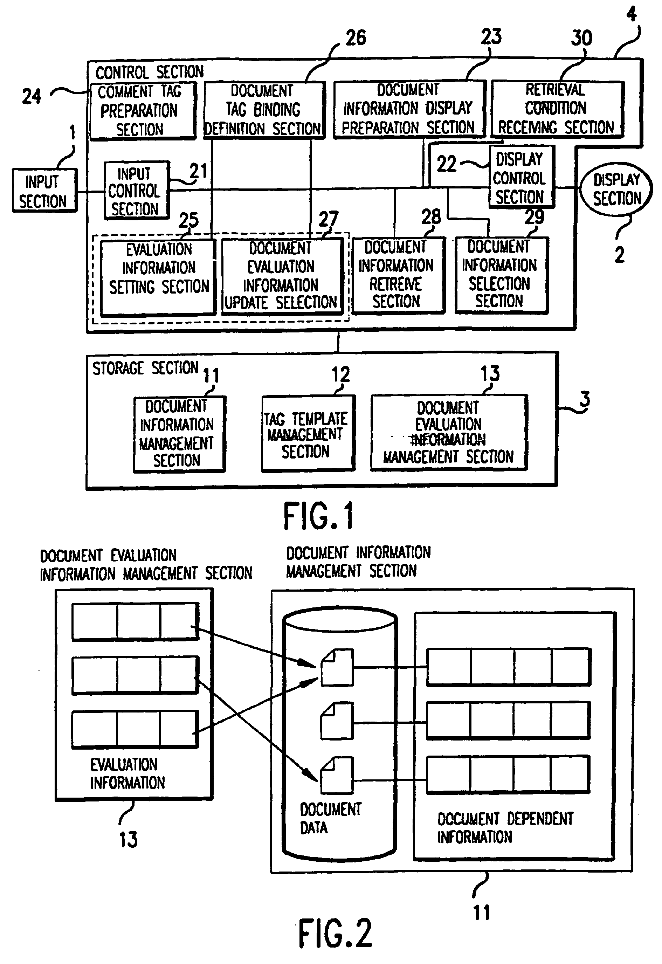

Fig. 1 is a block configuration diagram showing a document processing device according to a first embodiment of a document management device of the invention. In Fig. 1, 1 designates an input section, 2 designates a display section, 3 designates a storage section, 4 designates a control section, 11 designates a document information management section, 12 designates a tag template management section, 13 designates a document evaluation information management section, 21 designates an input control section, 22 designates a display control section, 23 designates a document information display preparation section, 24 designates a comment tag preparation section, 25 designates an evaluation information setting section, 26 designates a document-tag binding definition section, 27 designates a document evaluation information update section, 28 designates a document information retrieving section, 29 designates a document information selection section and 30 designates a retrieval condition received section.

Although the following description illustrates an example using additive information to represent evaluation of document, the use of additive information is not meant to be limiting. It may be used for represent information associated with various purposes. In the following description, an electronic tag is called a comment tag.

In the input section 1, a user inputs document processing or a document data command. For example, the input section 1 may be a keyboard, a mouse or the like. The display section 2 displays document data, document dependent information, comment tags or the like. The display section 2 is formed, for example, by a display device.

The storage section 3 stores data as an object of processing. For example, the storage section 3 is constituted by various storage devices, such as a semiconductor memory, a magnetic storage device or the like. The storage section 3 includes a document information management section 11, a tag template management section 12, a document evaluation information management section 13 and the like. The document information management section 11 manages the document data, together with any dependent information on the document. The tag template management section 12 can manage a tag template having information that is necessary to create a comment tag. The document evaluation information management section 13 manages evaluation information for the document.

The control section 4 controls the processing. The control section 4 can be formed by a CPU or the like. The control section 4 comprises input control section 21, display control section 22, document information display preparation section 23, comment tag preparation section 24, evaluation information setting _ section 25, document-tag binding definition section 26, document evaluation information update section 27, document information retrieving section 28, the document information selection section 29 and retrieval condition receiving section 30.

The input control section 21 controls the input section 1 to receive a command from a user. For example, the input control can be a standard window system. The display control section 22 controls the display section 2 to display document information or a tag. The display control can also be a standard window system.

The document information retrieving section 28 retrieves document information from the storage section 3. If a retrieval condition is passed from the retrieval condition receiving section 30, the document information retrieving section 28 takes out document information, which satisfies the retrieval condition. The taken-out data are delivered to the document information display preparation section 23, for example, to create the display information. The document information display preparation section 23 creates display information to display document information, and delivers display information to the display control section 22. The display information is created to display the document information in a list or like form.

The comment tag preparation section 24 selects a piece of information for the tag template, which is managed by the tag template management section 12 based on a command from a user. Thus, it creates a comment tag. Creation of the comment tag implies presenting all or part of the evaluation information to users. However, this does not necessarily mean that an independent data structure holds evaluation information created in each comment tag. For example, comment tags may be prepared as an inquiry to define a set of evaluation information to be combined. When the display of the comment tag becomes necessary, the comment tag may be presented to a user as a virtually generated view.

The document information selection section 29 selects document information among the document data taken in the document information retrieving section 28, in response to a command from a user. The evaluation information setting section 25 sets evaluation data to a comment tag created in the comment tag preparation section 24.

The document-tag binding definition section 26 relates comment data created in the comment tag preparation section 24 to document data, selected in the document information selection section 29. The document evaluation information update section 27 updates evaluation information regarding the related document data, based on the evaluation data set in the comment tag.

The retrieval condition receiving means 28 receives a retrieval condition, input by a user through the input section 1. The received retrieval condition is then passed to the document information retrieve section 28.

Fig. 2 is a diagram showing a relationship of information in the document information management section 11 and document evaluation information management section 13. The document information management section 11 manages document data and document dependent information accompanying the document data. The document data forms the document, for example, image data of document, text data, chart data and table data.

The document dependent information is a set of data originally attached to the document data, for example, author, creation date, name and the like. In general, different documents have different dependent information. In the case of a patent, information, such as filing date, applicant, abstract, can be included in document dependent information. Document dependent information is universal information inherent to the document data itself. Only one set of dependent information can be attached to each document data, and its values are constant and independent of the viewpoint of each evaluator.

The document evaluation information management section 13 manages the evaluation information, as above described. The evaluation information is information related to the document data, based on a viewpoint or criteria of an evaluator, i.e., it is subjective. The evaluation information generally does not have a relationship to the document data body. For example, the evaluation information can include an importance in the specific business process, a department in charge, readers of the reference and the like.

The document data need not always be bound with evaluation information. Further, plural pieces of evaluation information may be bound with the same document data. For example, the document management system in JP 871 has a document information management section, but does not have a document evaluation information management section. The binding information indicates that a document bound with evaluation information can also be stored.

Fig. 2, in order to facilitate the explanation easy, the document evaluation information management section 13 and document information management section 11 are separate described and illustrated. Further, the document information management section 11 manages the document data and document dependent information separately. The invention is not limited to such a configuration. The document evaluation information management section and document information management section may actually be the same. Also, the document dependent information may be embedded within document data.

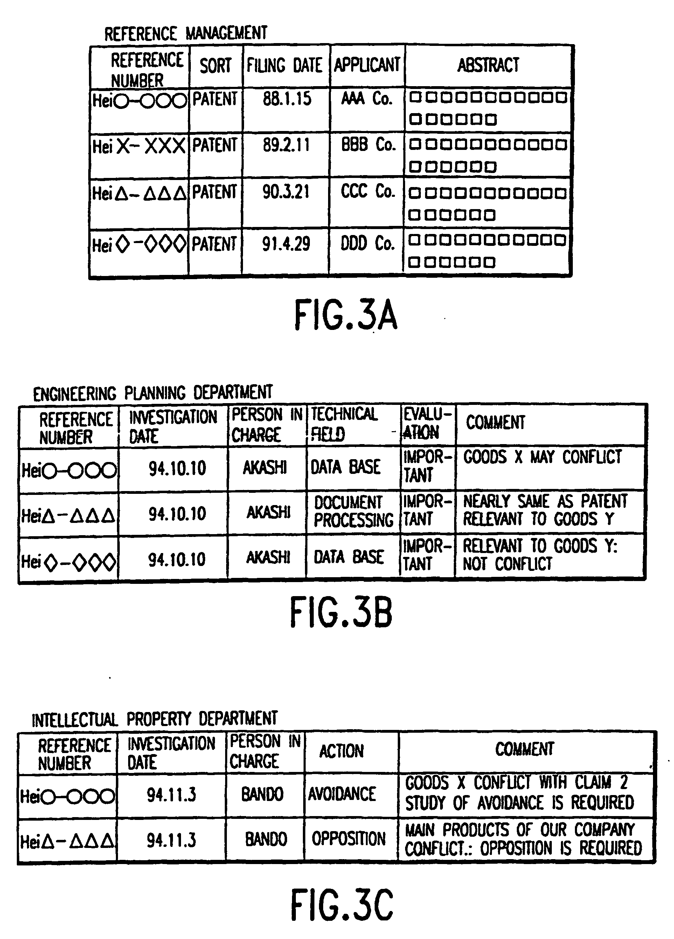

Here, both the document dependent information and document evaluation information have a relationship within the relational database that is separate from document data. Fig. 3 (A) -3 (C) are diagrams of a relationship describing the document dependent information and document evaluation information.

The reference control or management (Fig. 3(A)) manages document dependent information. The engineering planning department (Fig. 3(B)) and intellectual property department (Fig. 3(C)) manage evaluation information of references from a viewpoint of the respective departments.

The document data are separately prepared, and binding of document dependent information and document evaluation information in the database with the document data is indicated by a reference number, which works as an identifier for the document data. Additionally, relationship means a data structure of a table within the relational database.

In this example, the document evaluation information and document dependent information are represented with different relationships, each of which is maintained to satisfy respective properties. The necessarily document dependent information accompanies the document data, and must be formed on a premise that it has universal content. In order to make such a setting, the document dependent information may be set as a user's input of an attribute value at registration of the document. The database is not limited to relational database. Any system which can manage data using any combination of attribute names and values, may be used.

The tag template management section 12 manages the tag template, as above described. The tag template can include a tag name and field list. This is a format to input evaluation information. The tag name is a name of the tag template. The field list includes a list of field information.

The field information includes an attribute name, attribute value default, display flag, input flag or the like. The attribute name is a name of an attribute. The display flag indicates whether the field is displayed, when the tag display is performed. The input flag is independent of a user inputting evaluation information to the field, when evaluation information is input. The attribute value default defines a displayed value as a default value, when evaluation information is input. As a default value, a variable evaluated during inputting of evaluation information can be defined. For example, if %DATE is designated a variable to, indicate date, and %USER is designated a variable to indicate a user name, and these are assigned as values, the values for evaluating these variables can be field values during inputting evaluation information.

In a comment tag, various evaluation information can be specified as the attribute name and attribute value. Due to a limitation of display space or the ease of understanding, it is more efficient that all evaluation information not be displayed. Also, some attribute values can be calculated automatically. Thus, the user need not input all attribute values. The display flag, input flag and attribute value default, as above described, provide such functions.

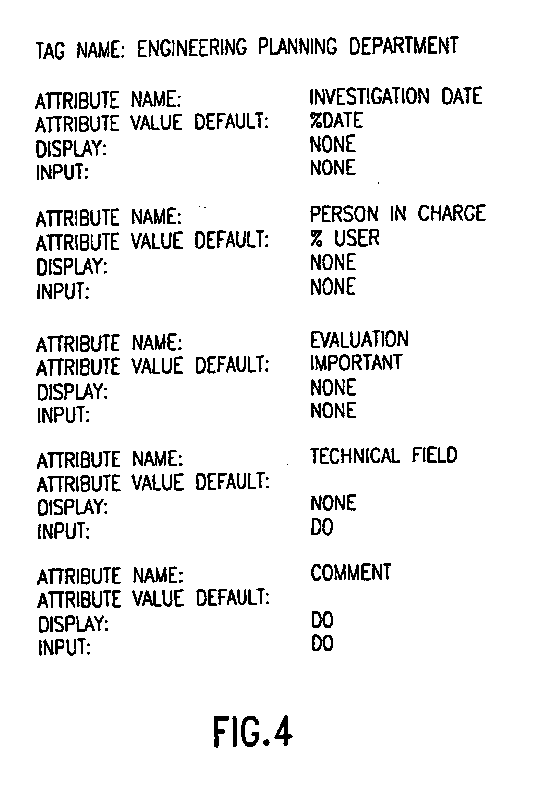

Fig. 4 is diagram of a tag template. The tag template in Fig. 4 corresponds to the evaluation information of the engineering planning department, shown in Fig. 3(B). In tag template of Fig. 4, the tag template name is "engineering planning department" and includes at least a list of five pieces of field information. For example, the first field information has an attribute name of "investigation date" and the date is given as a default value of this field. Also, it indicates when the attribute information is input. The value of the field need not be input, and is not displayed as a comment tag.

In this tag template, inputting of the evaluation information may be only in the fields of the technical field and comment. In each of the investigation date field, a person in charge field and evaluation field, a default value is set. Also, a comment tag displayed is only the field for the comment.

The information defined by the tag template can include information defined by the relational database. The tag template and scheme of the relationship may be coincident. Thus, a method of maintaining such relation is always specified. However, if the database system is extended to enable a definition of the tag template, the information is held at one position. Accordingly, consistency between the definitions can be easily maintained. Of course, the utilized database need not be limited to relational database.

When defining a tag template, a corresponding scheme for a relational database is defined. The data registration for corresponding database is performed at the inputting process of the evaluation information. The invention is not limited to the relational database, to the template, and inputting of the evaluation information. For example, a comment, tag, or field may be freely added or deleted.

The database can be treated as a semi-structured message. Also, when a database without a particular scheme or definition of a class is adopted as a new comment tag, an example of a comment tag is always copied and used to create a comment tag. A template may be virtually defined by processing or extracting a common part of a plurality of comment tags or the like.

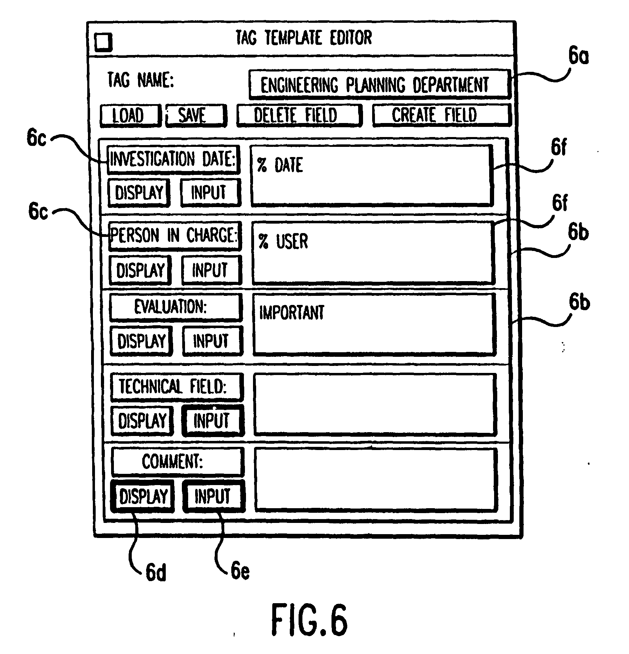

Next, the operation of the first embodiment will be described. Fig. 6 is diagram of a display screen defining a tag template. The tag template can be created, for example, using an editor, as shown in Fig. 6. In the display screen of Fig. 6, an area 6a inputs a tag name. Areas 6b define each field and are arranged, as buttons. For example, a "load" button for reading an other tag template, a "save" button for holding a defined tag template, a "delete field" button for deleting a field, and a "create field" button for adding and inserting a new field. Also, in the area defining each field, areas 6c can input an attribute name, display buttons 6d and input buttons 6e can change a state of a display flag and an input flag, and areas 6f can input attribute value default.

The display button and input button have a variable display state, in response to the display flag and input flag. In Fig. 6, buttons set to a display state or input state are shown by thick lines. The display button and the input button can be accessed by a user clicking a mouse or the like. Every time a command is entered, a display flag or input flag can be changed.

In Fig. 6, the screen defining the tag template in Fig. 4 is illustrated. In the area for inputting a tag name, "engineering planning department" is input. Each field for the investigation date, person in charge, evaluation, technical field and comment can be defined. For example, in the investigation date, "%DATE" can be input as an attribute value default. Also, in the field of the technical field, the input flag can be set to the input state.

In Fig. 6, the "save" button is actuated. Thereby, tag template data having the displayed content can be stored in the template management section 12. The scheme definition command for the relational database can be accessed. When the tag template shown in Fig. 6 is defined, the command is followed. Thereby, a relationship in the database can be defined. Additionally, other detailed information can be described, such as declaration of the data type of respective attribute, is omitted.

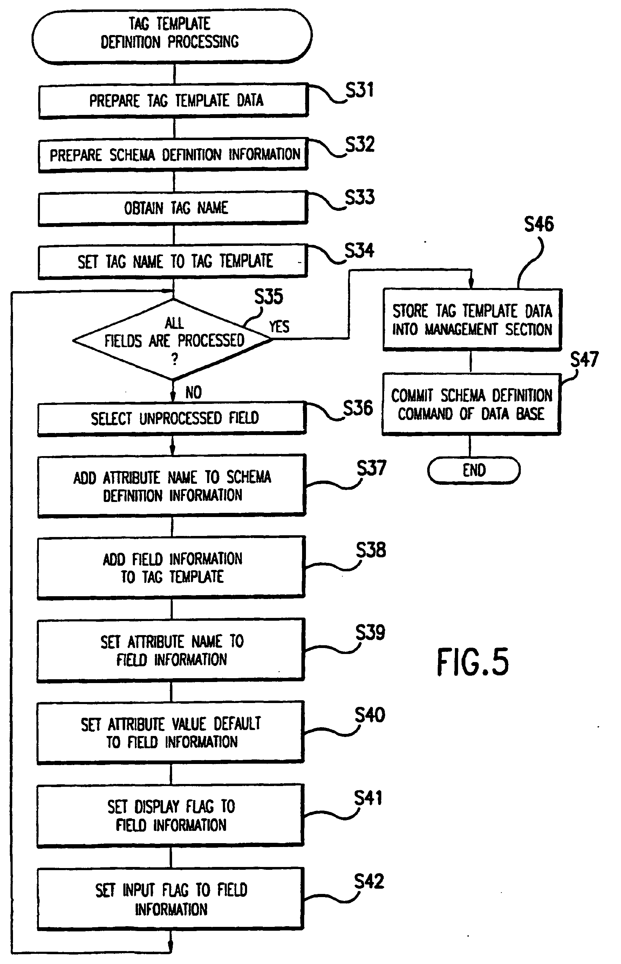

Fig. 5 is a flow chart showing processing defining a tag template, according to a first embodiment of the document management device. The control of the flow chart is accessed when the tag name, attribute name and flag for each field are set, and the "save" button is actuated on the tag template editor (in Fig. 6). The defined tag template is managed by a tag template management section 12, for example, a tag template data as in Fig. 4. Thus, database data for the corresponding document evaluation information management section 13 can be defined.

At step S31, the data structure describing the tag template is created and initialized. At step S32, the data structure for the scheme definition information to define the scheme is created and initialized. The data structure then becomes a list of attribute name. At step S33, a tag name is input by a definition tool or the like, and a tag template is obtained. At step S34, the obtained tag name is set as a value for the tag name in the tag template data.

At step S35, a decision is made whether the definition processing on all fields is finished. When the processing is finished, process is transferred to step S46. At step S36, one of the unprocessed fields is selected.

At step S37, an attribute name corresponding to the field information is added to definite information. At step S38, field information is created, and added to the tag template data. For created field information, an attribute name is set in step S39. The default value is set as the attribute value at step S40, the default value is set as the display flag in step S41, and the default value is set as the input flag in step S42. Thus, new field information can be added as a list of the tag template.

When processing of all fields is finished at step S46, the tag template data can be stored in the tag template management section 12. At step S47, the definition command of the relational database is executed. Thereby, a relationship in the database is defined.

New tag template data has been defined by above processing. Of course, a tag template data, which was previously defined, can be corrected, and/or a new tag template can be defined, using previously defined tag templates.

Next, a process for inputting evaluation information using a created tag template will be described. To input evaluation information, an evaluation information input tool can be used. In an evaluation information input tool, an area is provided for inputting evaluation information that corresponds to the field information, based on a tag name command from a user, and also based on the tag template corresponding to the tag name. The data inputted in the area may be evaluation information.

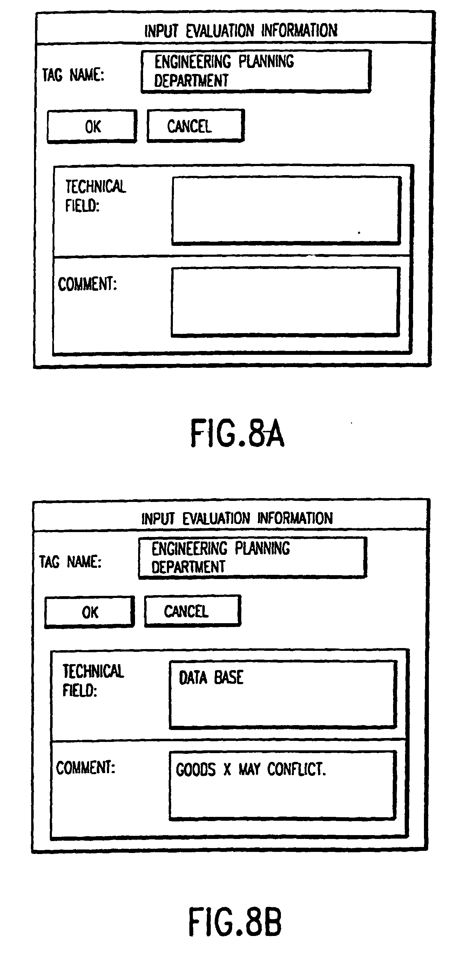

Figs. 8(A) and 8(B) are diagrams for a display screen of an evaluation information input tool used to input evaluation information. Creation of evaluation information stored and managed in the document evaluation information management section 13 can be performed according to a tag template in the tag template management section 12. For example, when the tag template in Fig. 4 is defined, a value can define each field within the tag template. Thereby, evaluation information can be created. When a field with an input flag in a tag template set to an inputted state, i.e., only input by a user, may be presented.

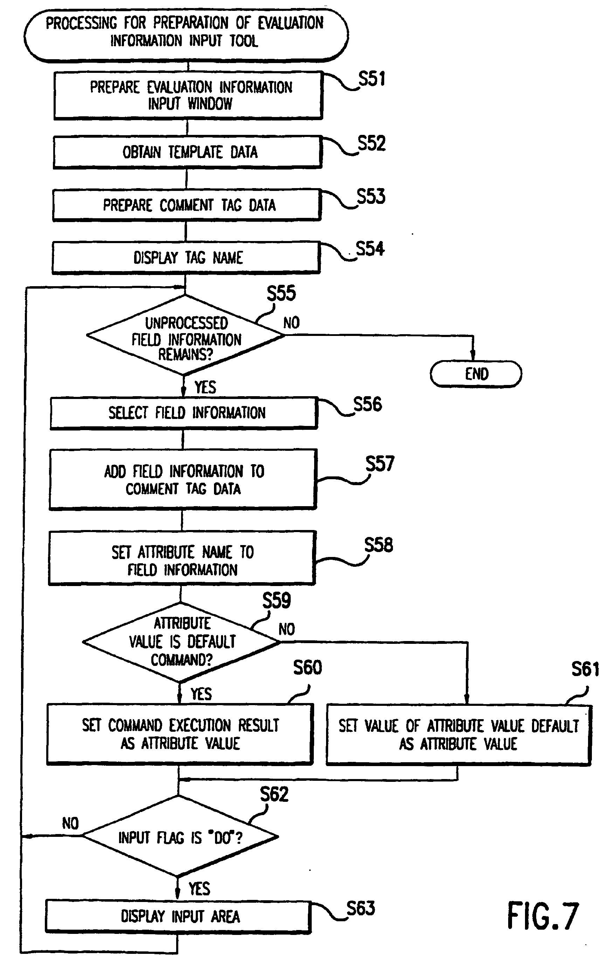

Fig. 7 is a flow chart for processing preparation of an evaluation information input tool, according to the first embodiment of the document management device. At step S51, an evaluation information input window is created and buttons or the like are displayed. At step S52, data for a tag template from the tag name or the like accessed by a user are obtained from the tag template management section 12. At step S53, the data structure expressing the command tag can be created. The data structure can become a list of the field information. At step S54, the tag name is obtained from data of the tag template and displayed in the evaluation information input window.

At step S55, a decision is made whether the unprocessed field information remains in the data of the tag template. When processing of all fields is finished, processing for preparation of the evaluation information input tool is finished. If unprocessed field information remains, at step S56, the unprocessed field information is selected from the data of the tag template.

At step S57, field information corresponding to the selected field information is created and added to a comment tag data. At step S58, an attribute name is taken from the field information of the tag template, and set to field information for the comment tag data.

At step S59, a decision is made whether a value of the attribute value default corresponding to the set attribute name is a command. If the value of the attribute value default is a command, at step S60, the command is executed. The value of a result is set as an attribute value for the field information on the comment tag. If the value of the attribute value default is not a command, at step S61, the value of attribute value default remains, and is set as the attribute value for the field information.

At step S62, a decision is made determining the value type in the input flag for the field information. When the value of the input flag is "do," at step S63, the field input area holding the attribute value is created, and displayed in the evaluation information input window. Returning to step S55, the processing is repeated for other unprocessed field information. Thus, processing is performed for information of all fields.

For a command tag template, the input area of the evaluation information may correspond to the field information, with the input flag value "do" is displayed in the evaluation information input window. A user may input the evaluation information in the displayed input area.

In Figs. 8(A) and 8(B), based on the definition of the tag template shown in Fig. 4, the tag name and two fields, technical field and any comment to be input by the user are displayed. The screen as shown in Fig. 8(A) is displayed and the user inputs information as shown, for example, in Fig. 8(B). The "ok" button is clicked to store the evaluation information in the document evaluation information management section 13.

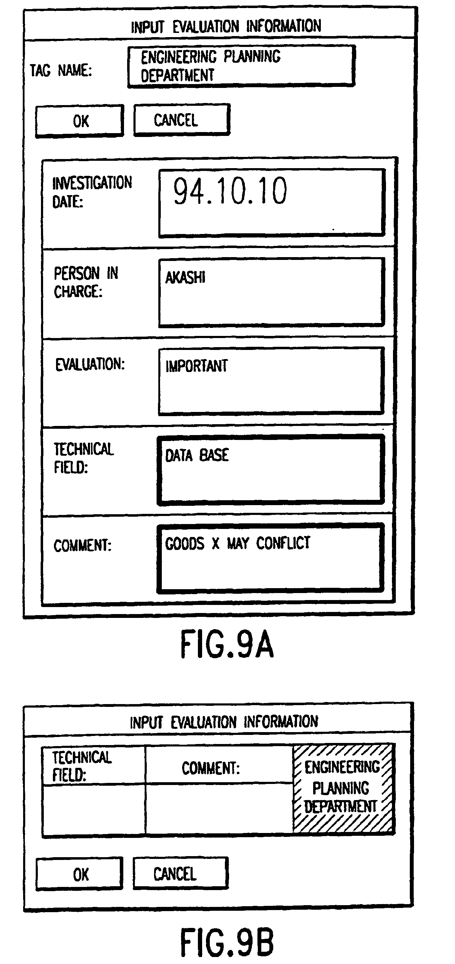

Figs. 9(A) and 9(B) are diagrams of another display screen for inputting the evaluation information. In Figs. 8 (A) and 8(B), only the fields to be input are displayed. However, the display method is not limited to this, and various modifications are possible.

In Fig. 9 (A), all available fields are displayed so the information can input. In this example, in the field "person in charge, "investigation date", and "evaluation" with an attribute default value are set at the initial state for the evaluation information input tool. In the "evaluation" field, the value of the attribute value default in "evaluation important" on the premise that a memo will be attached to the important document. Also, areas to be input by a user are shown by thick frames.

Also, the evaluation information input tool need not reflect the data structure for the tag template. For example, in Fig. 9B, an input may be performed using a tag display. Further, information may be input directly to a tag display attached to a document, as described.

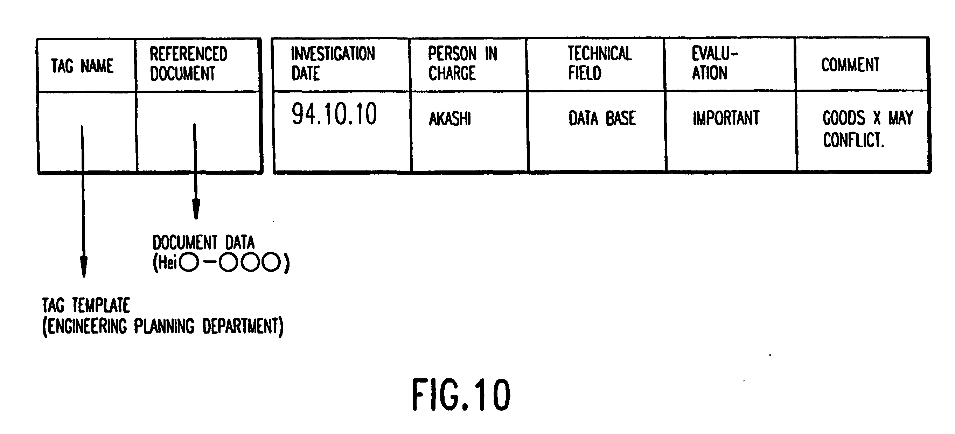

Fig. 10 is diagram of data to define a comment tag, according to the first embodiment of the document management device. As above described, the comment tag does not exist as an independent data structure. The comment tag is a virtually generated view or a temporarily created structure, where evaluation information related to the selected document is displayed, according to a tag template.

The comment tag shown in Fig. 10 includes a set of attribute names and values as evaluation information. The comment tag maintains the tag template by a tag name and its relationship to corresponding document. A set of attribute names and values can be, for example, set as an attribute name "investigation date" and the attribute value "94. 10. 10." The tag name is attached to the tag template.

In this embodiment, the tag name serves as a relation name that is updated during update processing for the evaluation information. The referenced document is a name that identifies a document held in the document information management section 11. The referenced document names the attribute value corresponding to the attribute "reference number" within the update processing of evaluation information.

Using the data structure in Fig. 10, the comment tag may be retrieved or a set of pointers for the tag template, document data and evaluation information may be defined. Since the comment tag is displayed in similar manner to memo attaching, as described later, an information specifying the display form may be defined.

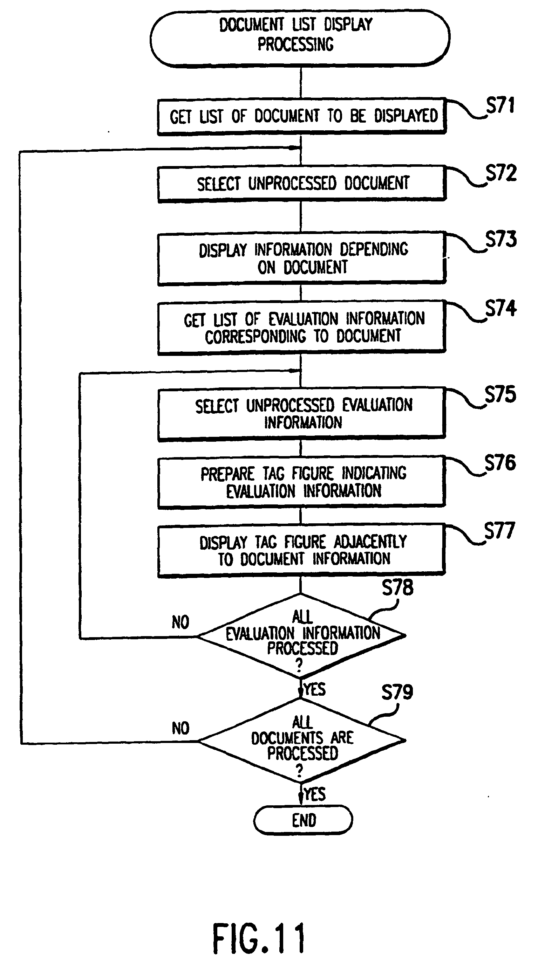

Fig. 11 is a flow chart for document list display processing according to the first embodiment of the document management device. First, at step S71, the list of the display document is retrieved from the document information management section 11. For example, a reference number of the displayed document and a list of dependent information on the document may be retrieved from the reference management relation in Fig. 3(A).

At step S72, an unprocessed document that is not displayed is selected. At step S73, information that is dependent on the selected document is displayed. At step S74, a list of evaluation information bound with the document is retrieved. For example, as shown in Figs. 3(B) and 3(C), when evaluation information is registered in the database, a list of evaluation information bound with the selected document is retrieved from the "engineering planning department relation" and the "intellectual property department relation".

At step S75, unprocessed evaluation information that is not displayed is selected. At step S76, a tag figure is created from selected evaluation information, and a definition of a tag template is associated with evaluation information. At step S77, the created tag figure is displayed adjacent to corresponding document information.

At step S78, a decision is made whether the whole evaluation information bound with the selected document is displayed. If evaluation information that is not displayed remains, processing in step S75 through step S77 is repeatedly performed. At step S79, a decision is made whether all documents were processed. If an unprocessed document remains, processing from steps S72 through step S78 is performed.

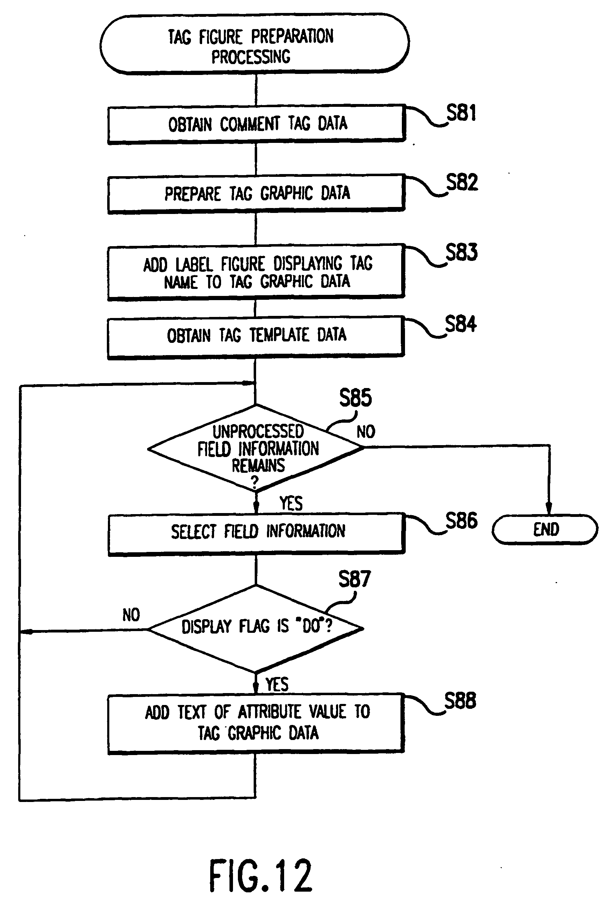

Fig. 12 is a flow chart showing processing of the tag figure in the first embodiment of the document management device. This processing is performed at step S76 of Fig. 11. Also, when the evaluation information is input, the tag figure can be displayed.

At step S81, comment tag data are obtained. When this processing is executed during inputting the evaluation information, data for the comment tag created during the input process are used. When the document information is displayed, the database is retrieved. Thereby, data of the relevant comment tag can be obtained. At step S82, a data structure for holding information to display a tag figure is created, and initialized. At step S83, data for displaying the label figure to display the tag name are added to tag graphic data. At step S84, a tag template data corresponding to the comment tag are obtained from the tag template management section 12 utilizing the tag name.

At step S85, a decision is made whether the unprocessed field information remains in the data of the tag template. If the unprocessed field information remains, the unprocessed field information is selected at step S86. At step S87, a decision is made concerning a display flag of the field information. If a display flag value is "do" at step S88, the data for display is set as an attribute value of the field information, and added to the tag graphic data.

When the processing is finished, for information in all fields of the tag template, a tag figure for display is created. This tag figure is displayed at step S77 in Fig. 11.

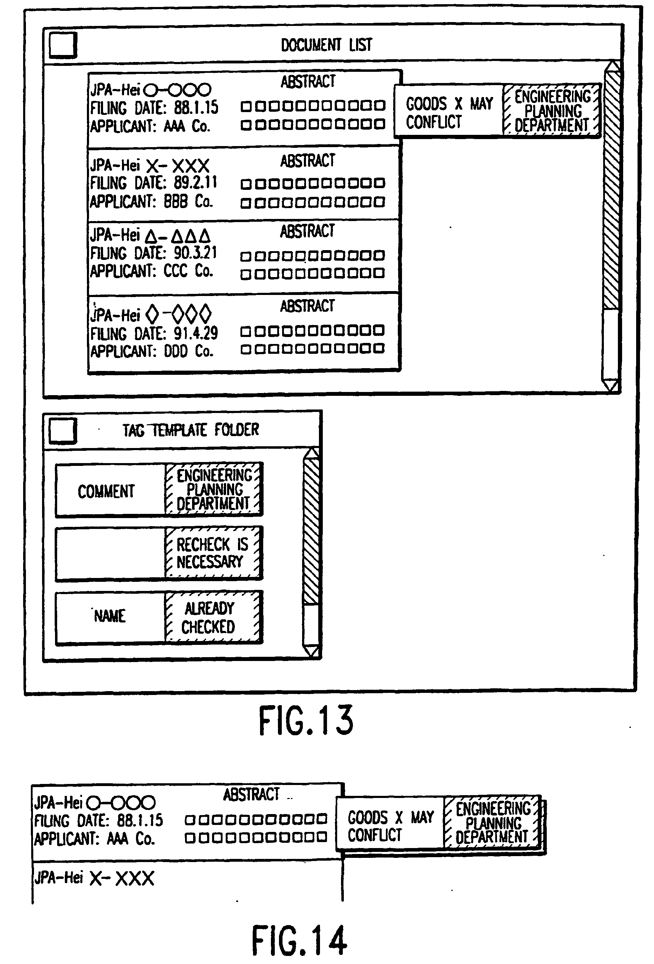

Fig. 13 is diagram of a displayed document list and tag template folder. The document list is displayed by processing, as shown in Fig. 11. Here, the document list is displayed using a document that is dependent on information managed by the document management relation, shown in Fig. 3A as a list. The comment tag displaying the evaluation information is displayed at a document position document with evaluation information attached. The evaluation information can be attached to one document. Display of this comment tag is created, for example, based on data shown in Fig. 10.

Also, in the display example of Fig. 13, in addition to the document list, the tag template folder can be displayed. The tag template folder displays a tag template necessary to create a comment tag, as a figure-like tag. The display is referred hereinafter to as tag display. In the tag template folder, the tag template creating the comment tags is tag-displayed for the following situations:
(1) To indicate a comment for the comment tag, i.e., for evaluation of the "engineering planning department".
(2) To indicate whether the comment tag indicating a necessity to check exists.
(3) To indicate a name of a person who performs the check, not necessarily a comment to indicate that the check, is performed.

Besides writing content, the tag can be utilized for various methods. The tag in item (1) will now be described in detail. Fig. 14 is diagram of a display example, when a plurality of tag figures are displayed. When tag display is performed, as above described, if plural evaluation information exist for one document data, plural tag figures are displayed. When plural tag figures can be displayed, each tag figure is displayed in a side-by-side arrangement. However, if sufficient display space is not available, for example as in Fig. 14, the figures may be displayed in an overlaying manner. In this situation, by clicking a mouse or the like, the lower tag figure that is displayed may be displayed as the upper tag figure.

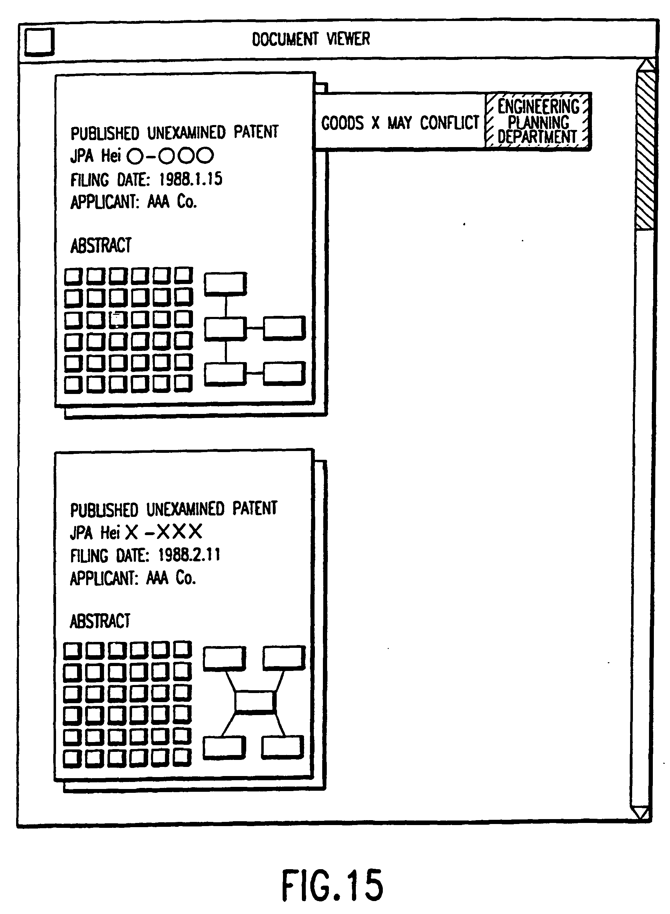

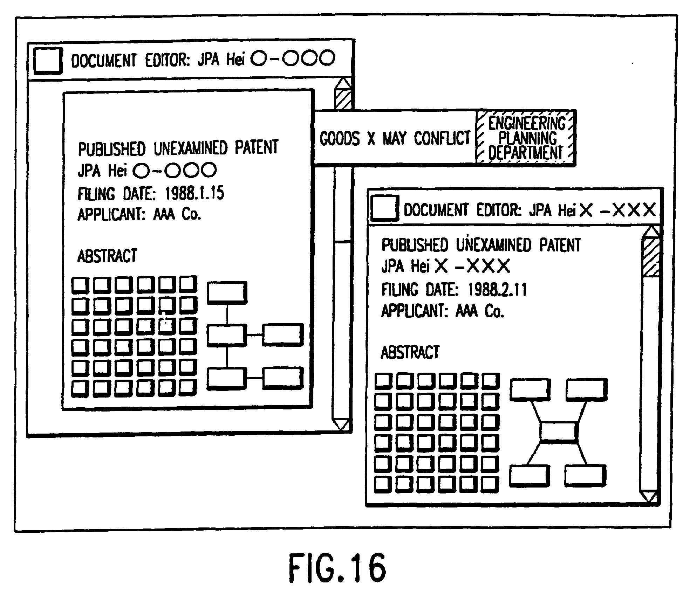

Figs. 15 and 16 are diagrams of a display of document data. In Fig. 13, the document dependent information that accompanies the document data is displayed as a list and a tag is attached to the list. However, the invention is not limited to Fig. 13. For example, in Fig. 15, an individual document data image may be displayed and a tag figure may be attached to the document data. In Fig. 15, although a tag is attached only within the document viewer, i.e., the window of the tool on display, as in Fig. 16, a standard window system may be extended so the tag is attached outside of a window.

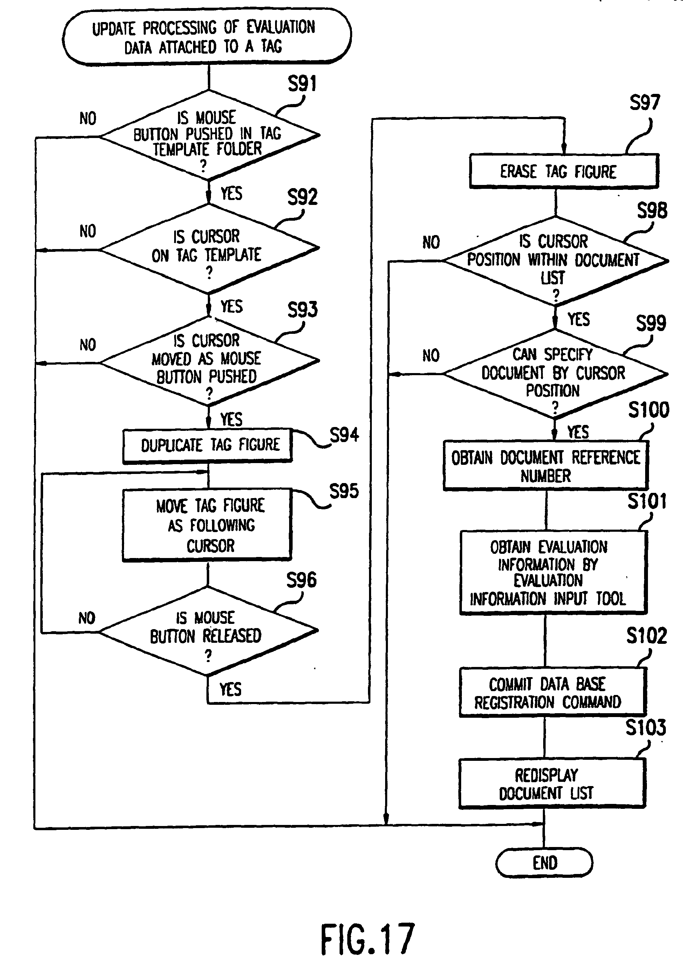

Next, an operation to supply document data with evaluation information will be described. Fig. 17 is a flow chart illustrating processing of tag attachment and evaluation information update, according to a first embodiment. In the following description, a user can use a mouse as an input device. Control of the mouse may be performed in a standard window system.

At step S91, a decision is made whether the mouse button has clicked on a tag template folder. When the mouse button is on the tag template folder, at step S92, a decision is made whether the cursor is above the tag template. If the cursor is above the tag template, at step S93, a decision is then made whether the cursor has been moved. This decision can be made whether the tag template within the tag template folder has been dragged. If these conditions are not satisfied, the control is returned to the window system.

At step S94, the tag template figure is duplicated. At step S95, the tag figure is moved by following the cursor. At step S96, a decision has been made whether a mouse button has been released. As long as the mouse button is pushed, processing at step S95 is continued.

If the mouse has been released, at step S97 the tag figure is erased. At step S98, a decision is made whether the cursor is within the document, list. If the cursor is within the document list, at step S99 a decision is made whether a document can be specified by the cursor position. This decision can be made in the tool of the document list. If these conditions are not satisfied in steps S98 and S99, control is returned to the window system.

When a document can be specified by the cursor position, a document is specified at step S100. At step S101 an evaluation information input tool is used, input from a user is received, and evaluation information is obtained. At step S102, a command to register evaluation information to the database is created, and the command is carried out. Thereby, the obtained evaluation information can be registered to the database. At step S103, a document list is re-displayed for the specified document. Processing for the document list display processing at steps S73 through S78 in Fig. 11 can then be performed. The tag figure representing the newly added evaluation information can then be displayed.

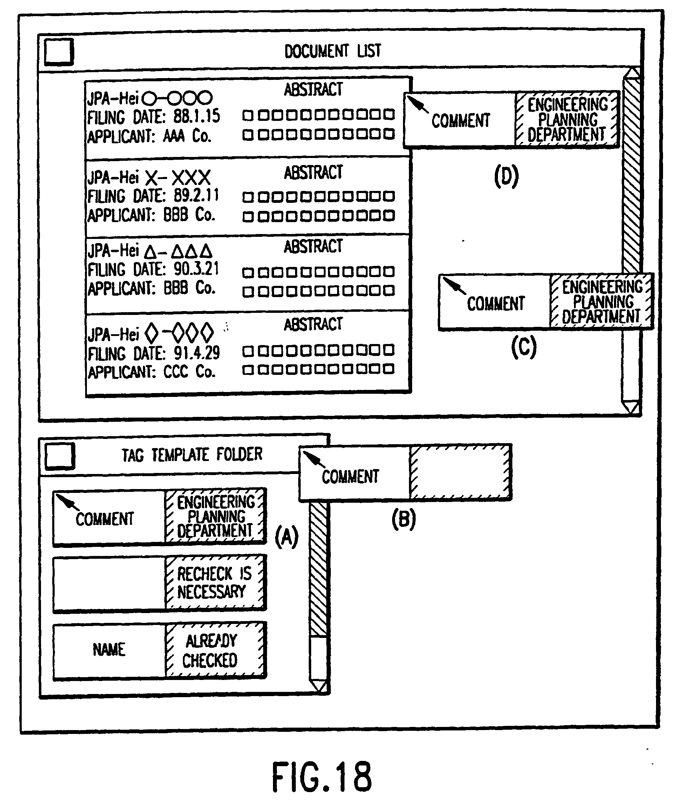

Fig. 18 is a diagram for supplying evaluation information to the document. Here, the comment tag for evaluation of the engineering planning department that is displayed in the tag template folder is selected, and attached to the document.

Initially, the cursor is moved onto the tag display showing a tag template for evaluation of the "engineering planning department", which is within the tag template folder. The mouse button is then clicked. Thereby, the tag template for evaluation of the engineering planning department can be selected. This is shown in Fig. 18 at (A). The selected tag template frame is shown as a thick line.

Next, while the mouse button is pushed, the cursor position is moved or dragged. Thereby, as shown in Fig. 18 at (B), the tag display is duplicated, and moved by following the cursor. Further, while the mouse button is pushed through (C) to (D), the tag display is dragged within the document list window. The mouse button is released at position of Fig. 18 at (D) and corresponds to a document as an object of the evaluation within the document list.

As a result, the comment tag can be supplied to a first document data in the document list shown in Fig. 18. Subsequently, the evaluation information input tool can be used, and the window in Fig. 8(A) is opened. Therefore, as shown in Fig. 8 (B), an input is performed in the area shown by the thick frame. Thus, a necessary attribute is defined. The "ok" button can then be pushed by the mouse, where the evaluation information is established, and the database is updated. After updating the database, the display of the document list is updated, as shown in Fig. 13.

Although the evaluation information input tool can be started immediately after the tag attachment operation, the invention is not limited to inputting evaluation information at the point of attaching the tag. For example, after the tag has been attached by a drag-and-drop step, an evaluation information input tool may be separately started. Further, evaluation information may be directly input to the tag figure. Also, evaluation information input need not be after attachment. A comment tag, with the evaluation information inputted can be stored or held, and then be attached.

Processing of registration and an update of the evaluation information can be performed, by form and directory commands provided by database query languages, such as SQL. For example, after a comment tag is attached, as in Fig. 18, when evaluation information is input using the evaluation information input tool shown in Fig. 8 and an update is directed, the command shown, as follows, may be created and directed:
INSERT INTO - engineering planning department (reference number, investigation date, person in charge, technical field, evaluation, comment); and
VALUES - ('JP-A o-ooo,' '94. 10. 10,' 'Akashi,' 'database,' 'important,' 'goods X may conflict')

By this, inputted evaluation information can be added to the "engineering planning department relation" in Fig. 3(B). The tag name is used as relationship, and attribute is an added reference number for the relating to the document.

Although the evaluation information is described above input when the comment tag is attached to the document and the database is updated immediately after the input finishing, the invention is not limited to this feature. Several comment tags can be attached and the evaluation information can be input, and then update of the database may be directed.

Also, attaching one comment tag is not necessarily in one document. One comment tag can be attached to collection of documents such as selected by a user. Thereby, evaluation information common to all documents can be included in a collection. Also, a comment tag already attached to some documents may be attached to other documents.

As above described, a comment tag can be attached and evaluation information can be input by a simple operation. Also, the comment tag can be detached in a simple operation so a cursor can be fitted to the attached comment tag and the mouse button is pushed and the button is released out of the reference. In this case, the evaluation information may be deleted or remain.

According to the information management device of the invention, registration of data a high degree of document management such as evaluation information can be performed without being knowledge of a database by only operation of attaching a tag in a manner similar to attaching a memo.

Thus, the evaluation information with a comment tag attached and input can be stored in the database, as above described. The evaluation information can be utilized with various modifications.

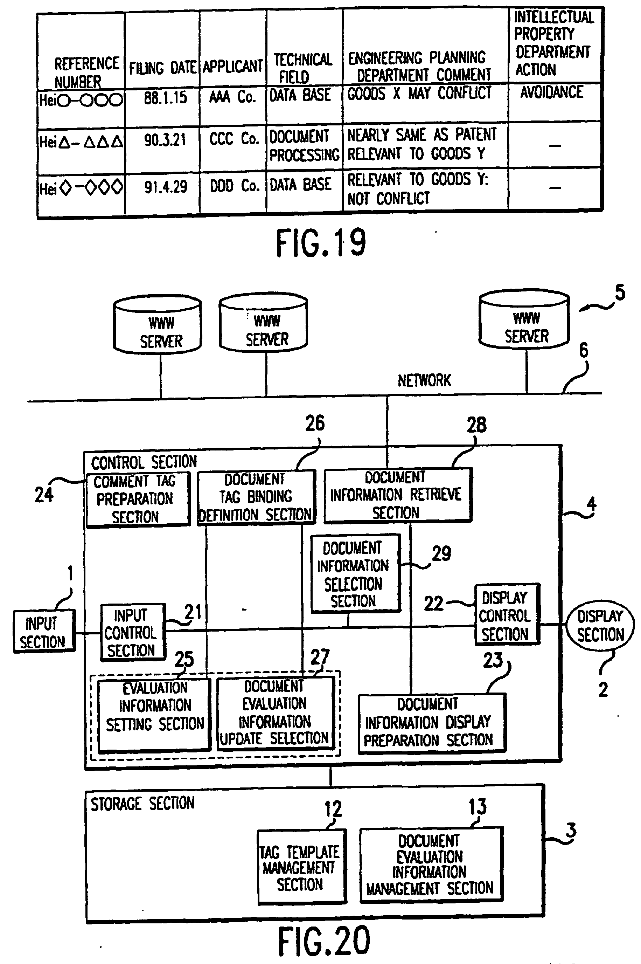

Fig. 19 is an explanation diagram of an example of a retrieval result utilizing evaluation information. As shown in Fig. 3, when a document dependent information and evaluation information are stored in a database, a database query language, for example, SQL can be used. Thereby, a relation as shown in Fig. 3 can be coupled and a retrieval result as in Fig. 19 can be obtained. In this example, the evaluation in the engineering planning department is "important" in addition to information accompanying the reference, a comment in the engineering planning department and corresponding information for the intellectual property department are shown.

For example, the retrieval result can be obtained by issuing the following retrieval commands. A retrieval condition receiving section may receive a retrieval condition inputted by a user, and then issue the retrieval command to the document information retrieve section. Suitable items can be written in a table, a card or the like, and prior art creating retrieval command is used. Thereby, such a retrieval command need not be directly input by a user. The items include:
SELECT: reference number, filing date, applicant, technical field, engineering planning department.comment, intellectual property department.action;
FROM: reference management, engineering planning department, intellectual property department; and
WHERE: evaluation of engineering planning department = "important".

As dependent information for the particular document, a reference number and applicant belonging to the document management relation can be used. As evaluation information for the document, "technical field," "comment," and "evaluation" belonging to the engineering planning department relation, and "action" belonging to the intellectual property department relation can be used.

The document information retrieval section retrieves the document information, which satisfies document retrieval condition(s). This processing includes at least two steps. First, document evaluation information, which matches the retrieval condition, as retrieved from the document evaluation information management section 13. Then, the document information that is bound to the retrieved document evaluation information is retrieved. In this example, the retrieval condition includes a condition for the dependent information for the particular document, thus the document information also satisfies this condition.

The retrieval condition is defined using only an attribute of a relation in the engineering planning department corresponding to one evaluation viewpoint. However, more complicated conditions may be defined by combining with attributes of the other evaluation viewpoints, such as a relation for the intellectual property department, or combining attributes of a relation for the document management.

As a result of attaching a comment tag as an evaluation for the document the evaluated documents can be put in order from one viewpoint using the structure of such comment tag and the input data to the comment tag.

Of course, utilization of the evaluation information stored in the database is a retrieval of the database, creation of the table or the like. A creation program for a higher degree table or a creation program of various types of graphs or charts may also be utilized.

Thus, the evaluation information is handled as information independent of the document data. Thereby the evaluation information can be effectively utilized. Although the evaluation information has been used as above, the invention is not limited. For example, various pieces of information, such as a work command, can be attached as a tag for the document data, and can be utilized.

Next, a second embodiment of a document management device will be described. As in the first embodiment, an example is shown where evaluation information is attached to document data that is internally prepared by a user. According to the second embodiment evaluation information can also be attached to document data managed by an external document database, which can be accessed through a network. -

In the second embodiment, a document management device includes a function that document data stored in the WWW, i.e., a World Wide Web server can be accessed. A comment tag can then be attached to document data accessed by a user.

Fig. 20 is a block diagram showing document processing device according to a second embodiment of the document management device. In Fig. 20, parts similar to those in Fig. 1 are designated by the same reference numerals. Accordingly, the description shall be omitted for simplicity 5 designates a WWW server(s) and 6 designates a network. In this embodiment, the storage section 3 does necessarily include the document information management section 11, but may include the tag template management section 12 and document evaluation information management section 13. Document information can be stored in the WWW server(s) 5, connected by a network 6.

The document information retrieving section 28 obtains document data from the WWW server(s) 5 connected by the network 6 according to URL (Universal Resource Locator) commanded by a user.

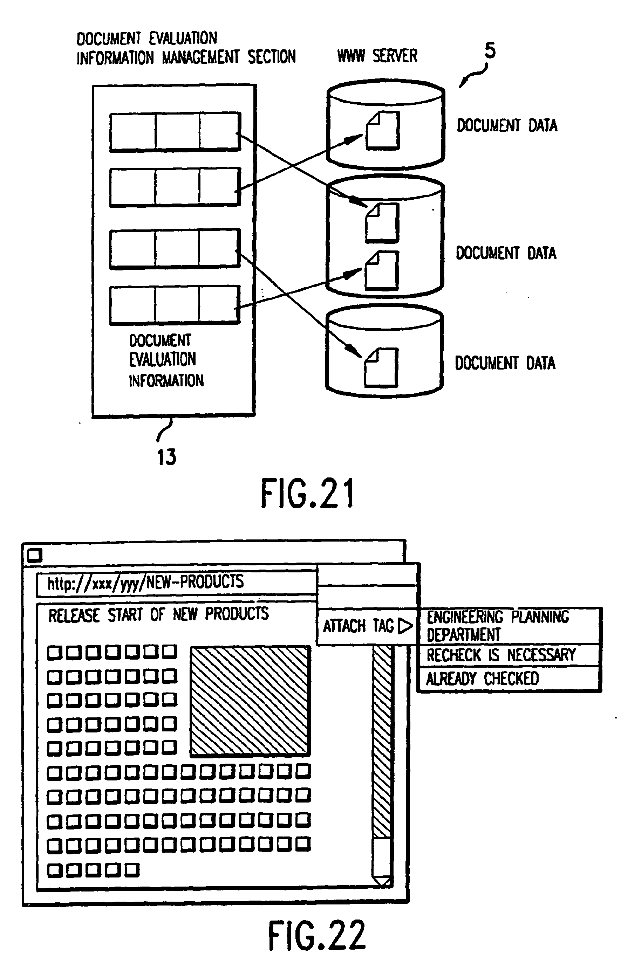

Fig. 21 is a diagram showing a relationship of information in the document evaluation information management section 13 and document data that is stored in WWW server(s) 5. In the second embodiment, an object with document evaluation information attached thereto can be various types of document data that is stored in plural WWW server(s) 5. For example, the data may be reference information, patent information, or an article in a newspaper. Document evaluation information managed by the document evaluation information management section 13 can include information indicating object to which the document evaluation information is attached.

Fig. 22 through Fig. 24 are diagrams of a document information display and tag template. Fig. 22 through Fig. 24 illustrate that a comment tag can be attached to the document referred to by a user. In the document information display window, document data obtained from the WWW server(s) 5 are displayed based on the URL "http://xxx/yyy/new-product.html" as commanded by the user.

Processing or creating a document information display window is similar to existing WWW clients, such as Mosaic. First, if a user inputs the URL, the document information retrieving section 28 analyzes the URL, and specifies the WWW server(s) 5 that is to be connected. It obtains document data by connection to the WWW server(s) 5. Next, the document information display preparation section 23 creates a display information, based on the obtained document data. The display control section 22 then creates a document information display window, and displays the display information in the window.

In Fig. 22, an item "attach tag" is prepared in the document information display window menu. The user selects this item from the menu, and a comment tag is thus attached. As in Fig. 22, if a user selects the item "attach tag," the menu to display a table of names for the tag template is displayed. Further, if a tag template is selected, an evaluation information input tool, as shown in Fig. 8, is actuated. The user then writes the necessary item, whereby the comment tag is attached. The list menu for the tag template can be created by obtaining a name of the tag template from the tag template management section 12.

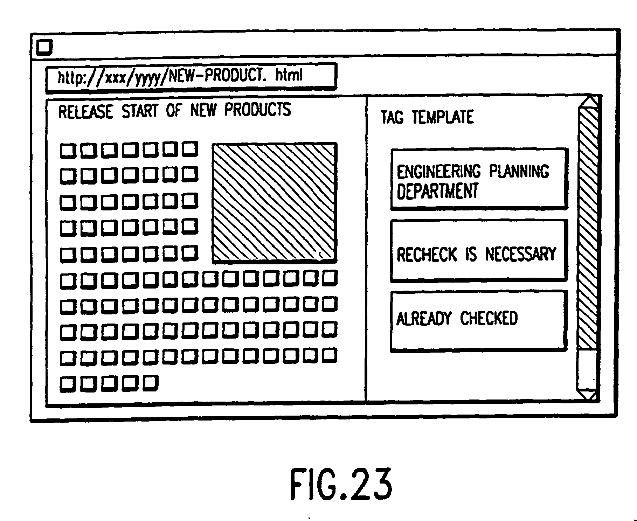

In the display in Fig. 23, the tag template list is displayed as a button. The user selects a button to display the tag template name, thereby the type of attached comment tag is determined. The button representing the tag template may be always displayed within the document information display window, or may be displayed only while the user performs the attaching operation of the comment tag.

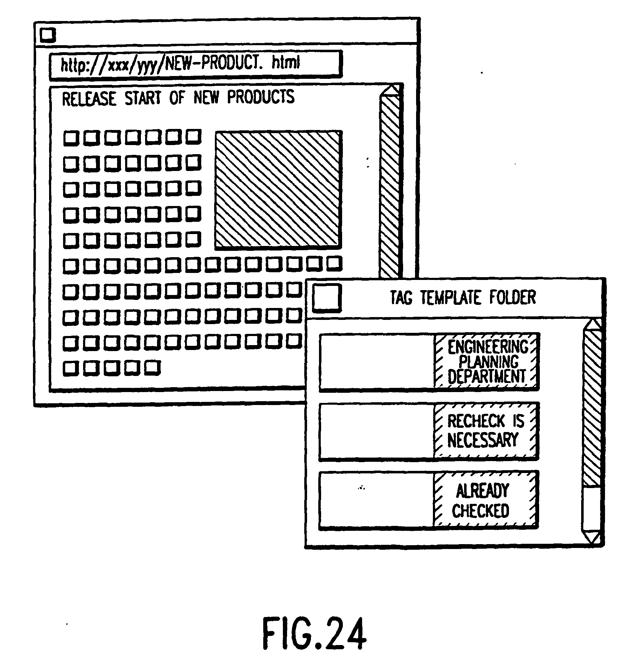

In Fig. 24, similar manner to the first embodiment, the tag template list can be displayed to represent the tag and the tag template folder. The user can select a template for the specific comment tag on the tag template folder in similar manner to the first embodiment. The user can perform drag-and-drop on the document information display window to attach the comment tag. Alternatively, after the tag template is selected on the tag template folder, the comment tag may be attached by a command using the menu item or a button.

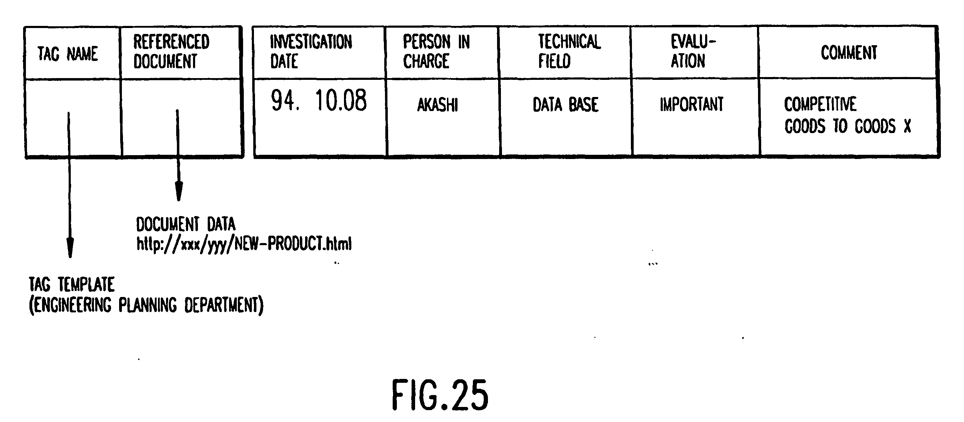

Fig. 25 is a diagram of the data defining a comment tag according to a second embodiment of the document management device. This differs from the first embodiment shown in Fig. 10, as the URL is stored in the field of the referenced document. Thereby, the document data for attaching the evaluation information is specified.

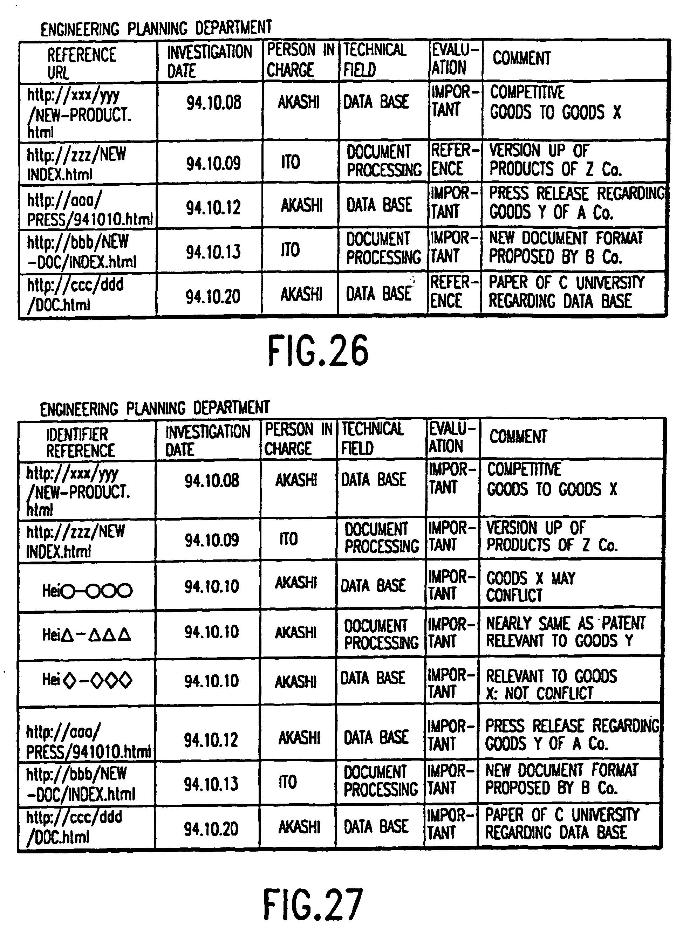

Fig. 26 is a diagram of a relation describing document dependent information and document evaluation information. Also, in the second embodiment, a content of the comment tag can be managed, as a relation in the document evaluation information management section 13. The relation shown in Fig. 26 differs from the exemplification shown in Fig. 3 by a content of each comment tag being related to the reference URL.

Fig. 27 is a diagram of another relationship describing the document dependent information and document evaluation information. In Fig. 27, the relationship uses a reference number shown in Fig. 3 and the relationship of the reference URL shown in Fig. 26 are unified. The evaluation information for different documents may be handled under a single management.

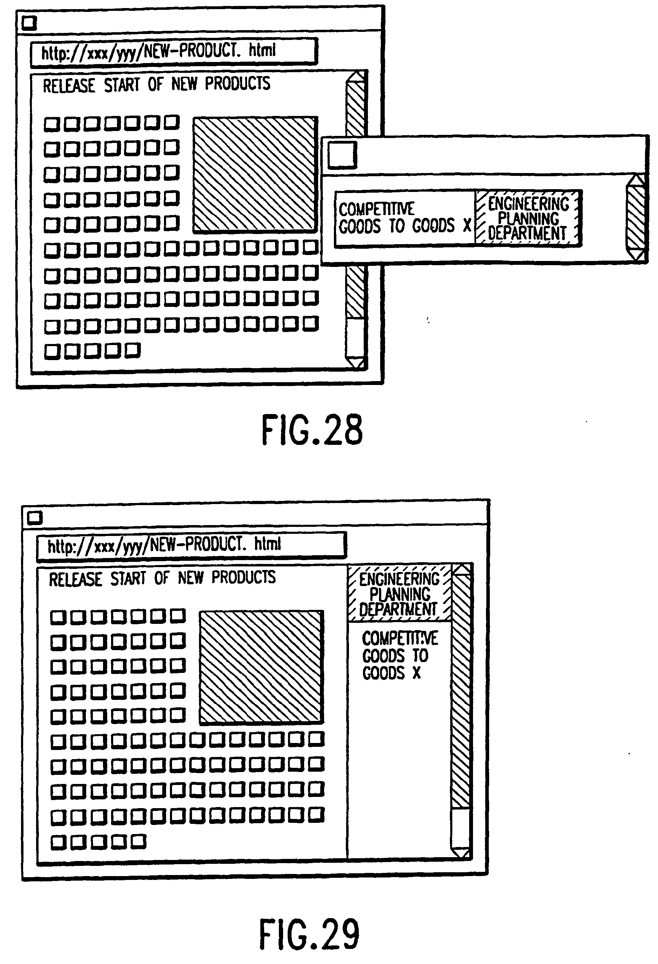

Figs. 28 and 29 are displays of the reference information and comment tag. In Fig. 28, the document information display window and evaluation information window, that displays a comment tag attached to document data, are both displayed. The document information display window and evaluation information window are interlocked with each other. Thus, if document data in the document information display window are changed, the comment tag bound with changed document data is displayed in the evaluation information window. If plural comment tags are bound with document data, the plural comment tags may be displayed in a side-by-side arrangement within the evaluation information window. Alternatively, plural comment tags may be displayed as overlaying as in Fig. 14. Also Fig. 29 illustrates a comment tag displayed with the associated document data within the same window.

The comment tag is described as attached by evaluation information related to the document. However, information capable of being related to the document is not limited to information regarding an evaluation. The comment tag can be attached by a document and information such as, for example, buying of fixtures for each department are related. Document data with a tag "engineering planning department" attached thereto are already attached by a tag "buying of fixtures" to indicate that products introduced in the document are to be bought as fixtures.

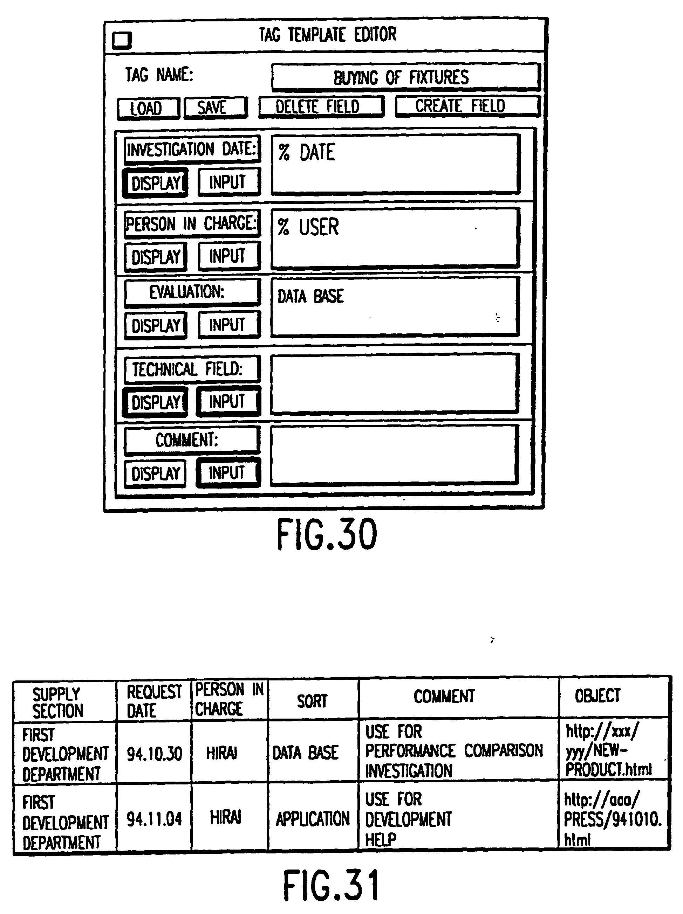

Fig. 30 is a diagram of another example of the display screen of a tool for defining the tag template. In Fig. 30, a tag template for "buying of fixtures" is creared by a tag template editor as in the first embodiment Fig. 6. In the tag template for "buying of fixtures," field information for "request date," "person in charge," "sort," "supply section," and "comment" is defined. When a tag is provided, a user can write columns of supply section and comment. When the tag is attached, request data and supply section are displayed within the comment tag.

The tag template defined as in Fig. 30 is stored in the tag template management section 12. When fixtures are to be bought, a tag is provided using this tag template. Fig. 31 is a diagram for buying fixtures expressed as a relation. Here, two comment tags are provided for separate document data. For example, in the first comment tag, "buying of fixtures" is attached for document data obtained from the WWW server, based on URL "http://xxx/yyy/new-product.html", as above described.

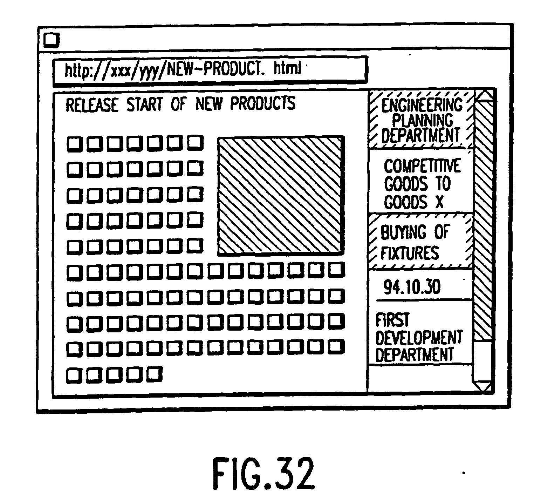

Fig. 32 is a diagram of another display of document information and comment tag. In Fig. 32, in addition to a display of document data and a tag "engineering planning department," a tag "buying of fixtures" is also displayed. The tag "buying of fixtures" may be stored as data as in Fig. 31 in the document evaluation information management section 13. When a user sees the document data, the tags "engineering planning department" and "buying of fixtures" are simultaneously displayed. Thereby, a user can determine that products, such as commented "competitive goods to goods X", are able to be bought as fixtures.

The comment tag is attached to relate the document and information for a schedule of a user. For example, the tag "engineering planning department" is attached to the document data, and the user attaches the tag "schedule", which describes a schedule of business activity for information described in the document, to the document data.

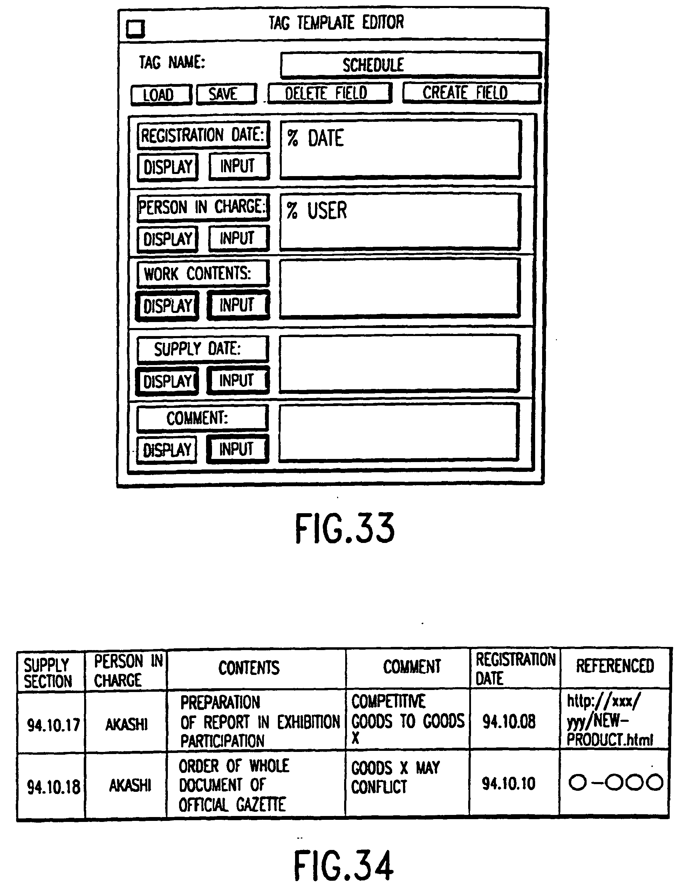

Fig. 33 is still another example of a display screen of the tool for defining the tag template. In this example, the template for a tag "schedule" is created. The tag "schedule" includes information of fields for "registration date," "person in charge," "work content," "supply date" and "comment." A person providing the tag inputs "work content," "supply date" and "comment." The fields "work content" and "supply date" are displayed within the comment tag.

The tag template for the tag "schedule" defined as in Fig. 33 is stored in the tag template management section 12. A tag regarding schedule is provided using this tag template. Fig. 34 is a diagram when the information for "schedule" is expressed as a relation. Also, two comment tags can be provided for separate document data. For example, for data of a first comment tag, the tag "schedule" is attached to the document data obtained from the WWW server, based on the URL "http://xxx/yyy/new-product.html", as above described.

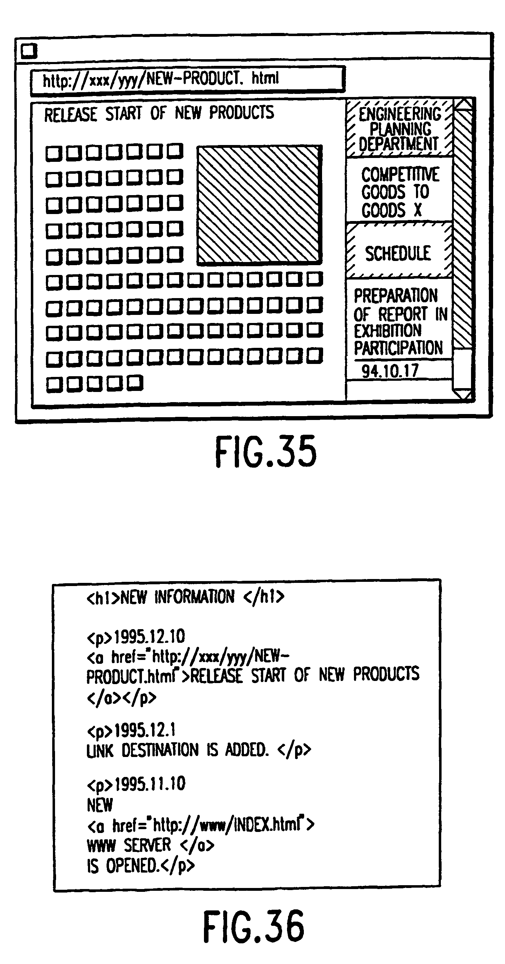

Fig. 35 is a diagram of still another display for document information and a comment tag. In Fig. 35, the document data and tag "engineering planning department" and the tag "schedule" for document data are displayed. When a user sees the document data, the tag "engineering planning department" and the tag "schedule" simultaneously displayed, the user can confirm a schedule of participating in an exhibition and preparing report regarding products commented as "competitive goods to goods X" by the engineering planning department.

Also, information regarding buying of fixtures or "schedule", as above described can be managed and provided as a comment tag. Further it can be displayed in a manner similar to information about evaluation.

In general, document data managed in the WWW server hyperlinks referencing other document can be embedded in a document described in HTML or HyperText Markup Language. Fig. 36 is a diagram of an HTML document. A content of the HTML shown in Fig. 36 will be content of the HTML document shown by a URL "http://xxx/yyy/new-product.html." This document includes the description "<a href = "htt:p://xxx/yyy/new-product.html"> release start of new products </a>" as a hyperlink referred to by the HTML d o c u m e n t s h o w n b y t h e U R L "http://xxx/yyy/new-product.html." The description "<a href...>" or "</a>" is usually called a "tag," but here these can be called HTML tag to distinguish the comment tag.

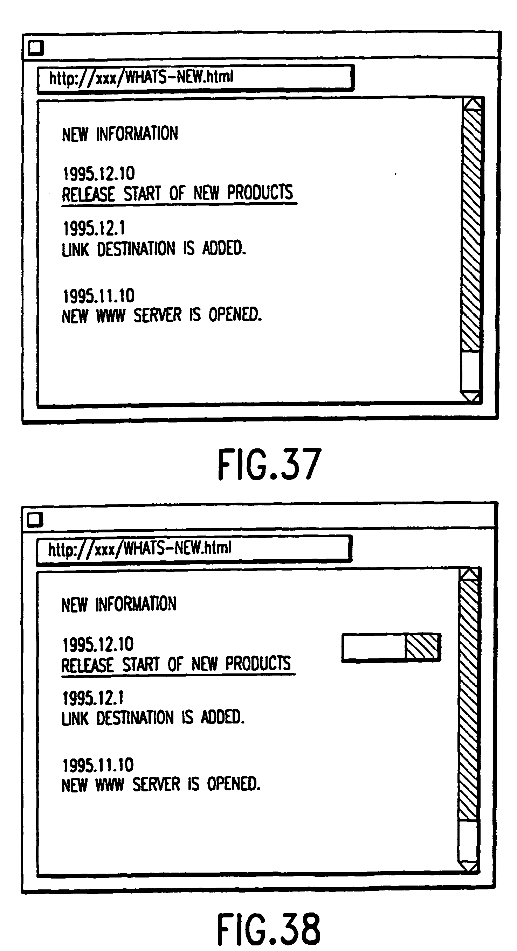

Fig. 37 is a diagram of a display of the HTML document, shown in Fig. 36, displayed to a document information display window. In the document information display window, a hyperlink referring to the HTML document shown by URL "http://xxx/yyy/new-product.html" is displayed as an anchor by a string "release start of new products." The string indicates that the anchor is underlined, thereby it is distinguished from strings not anchored.

The existing WWW client can assign an anchor by a device, such as a mouse. Thereby, document data can be obtained and displayed from the WWW server based on the URL from a hyperlink, as an anchor. For example, when an anchor "release start of new products" is clicked on by the mouse in the document information display window of Fig. 37, document data is shown by URL "http://xxx/yyy/new-product.html" and displayed on a document information display window.

In the second embodiment, since the evaluation information holds the URL referencing document data, when a display for processing of the HTML document is performed, and if the hyperlink is included in the document, the evaluation information which is associated with the URL held by the hyperlink, is retrieved. Thereby, it can be determined whether the comment tag is attached to the document referred to by the hyperlink.

Fig. 38 is a diagram of a display when the comment tag is attached to a document accessed by a hyperlink. When a comment tag is attached to the document accessed by a hyperlink, for example as in Fig. 38, an anchor representing the hyperlink may be displayed by providing a mark representing the attached comment tag. In Fig. 38, to distinguish the anchor with a comment tag attached from the anchor with a comment tag not attached, a mark indicating that the comment tag is attached is displayed adjacent to an anchor with the comment tag attached. Besides this, distinguishing may be performed using various display methods, such as font variations of anchor, color, thickness of line, or enclosing of an anchor by a frame or flashing of anchor.

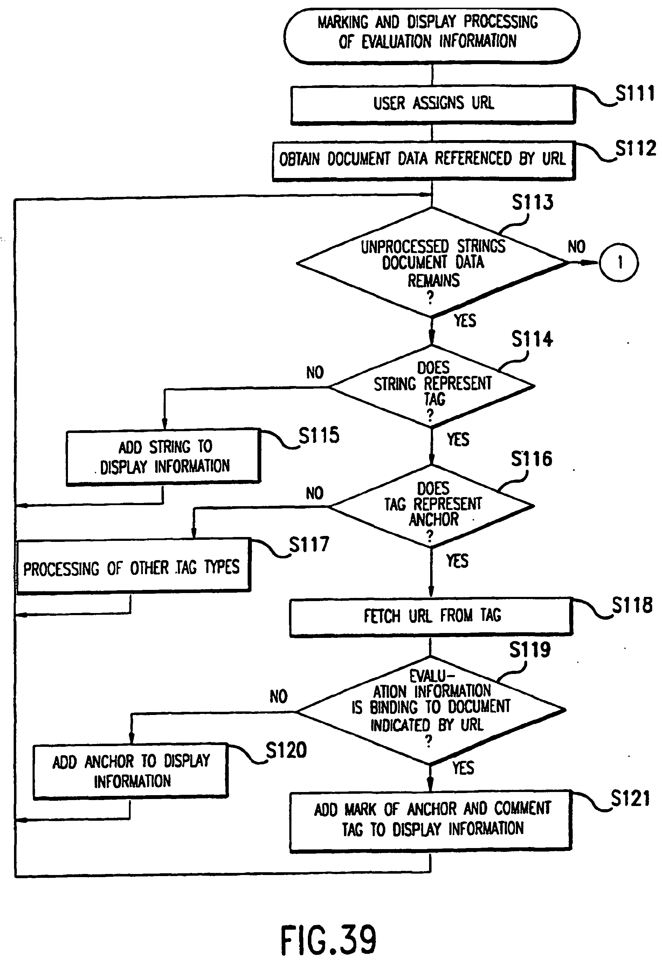

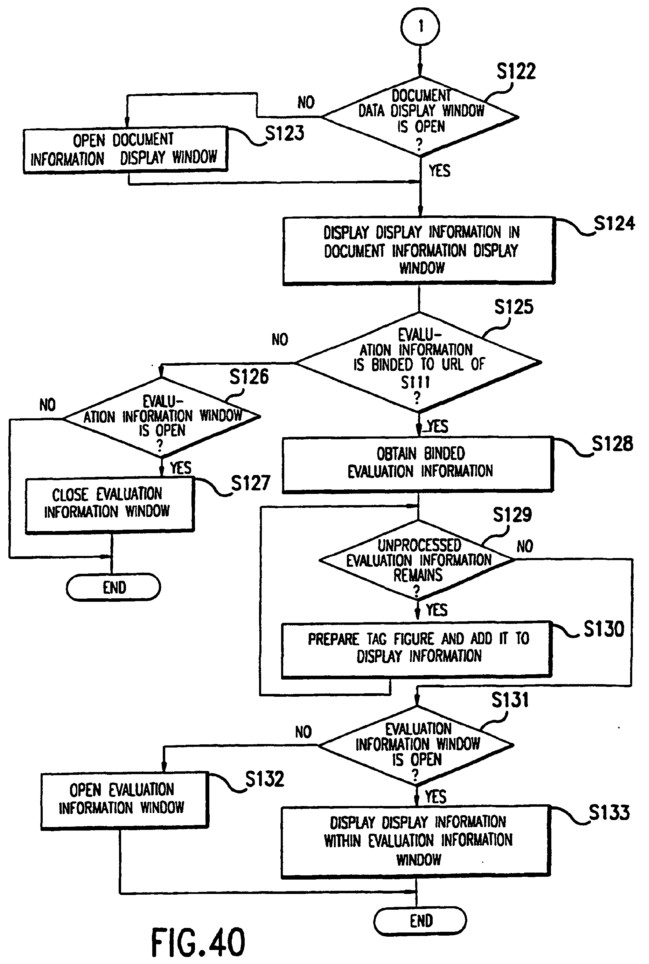

Figs. 39 and 40 are flow charts for the second embodiment of the document management apparatus. They indicate display processing document information with an anchor provided with a mark to indicate attaching of the comment tag, and display processing the evaluation information bound with the document data respectively. At step S111, a user inputs by a keyboard or clicking a mouse, an anchor to assign a URL. At step S112, the document information retrieving section 28 analyzes the URL, specifies the WWW server(s) 5, and obtains the document data connected to the WWW server(s) 5 shown by the URL. It also delivers data to the document information display preparation section 23. At step S113, a decision is made whether unprocessed data remains in the document data. If it remains, the process is advanced to step S114. If it does not, the process is advanced to step S122. At step S114, a decision is made whether the string loaded from the document data is the HTML tag. If it is the HTML tag, the process advances to step S116. If not, a string is added to the display information in step S115, and the process is advanced to step S113.

At step S115, a decision is made regarding whether the HTML tag is a tag indicating hyperlink. If it is the tag indicating hyperlink, the process advances to step S118, if it does not, at step S117, processing of the HTML tag, other than hyperlink, is performed and process advances to step S113.

At step S118, a URL is retrieved from the HTML tag indicating hyperlink and is delivered to the document evaluation information management section 13. At step S119, evaluation information, including the URL as referenced document is retrieved. If evaluation information exists, the process advances to step S121. If there is no evaluation information, at step S120, an anchor is created, and added to the display information. The process then advances to step S113. If the evaluation information exists, at step S121, an anchor is created, and added to the display information. Further, graphic data for indicating the comment tag previously prepared are added to the display information, and process advances to step S113.

If all processing regarding the document data is finished, at step S122, a decision is made whether the document information display window is created. If it is not created, at step S123, a document information display window is created. At step S124, display information is displayed in the document information display window.

At step S125, the evaluation information including the URL obtained at step S111 is retrieved as a reference document. If the evaluation information exists, the process advances to step S128. If no evaluation information, at step S126, a decision is made whether the evaluation information window is created. If the evaluation information window is created, at step S127, the process advances to step S14, and the evaluation information window is finished. If the evaluation information window is not created, processing is finished at this point. At step S125, if evaluation information is retrieved at step S128, collection of the evaluation information, including the URL as a reference document, is delivered to the document information display preparation section 23. The document information display preparation section 23 creates new display information for evaluation information.

At step S129, a decision is made whether the unprocessed evaluation information exists. If it exists at step S130, the tag figure is created from evaluation information content and a definition of the tag template corresponds to the evaluation information. This is added to the display information and the control returns to step S129.

After the entire evaluation information is processed at step S131, a decision is made whether the evaluation information window is created. If it is not created, at step S132 an evaluation information window is created. At step S133, display information is displayed in the evaluation information window, and the processing is finished.

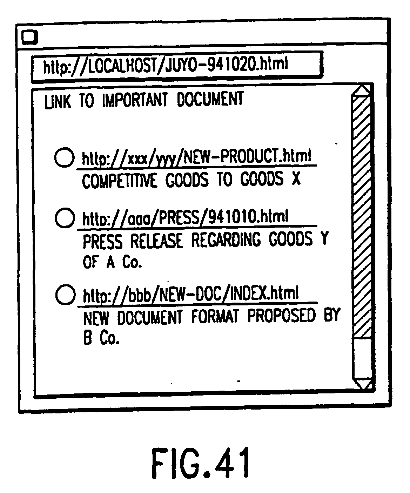

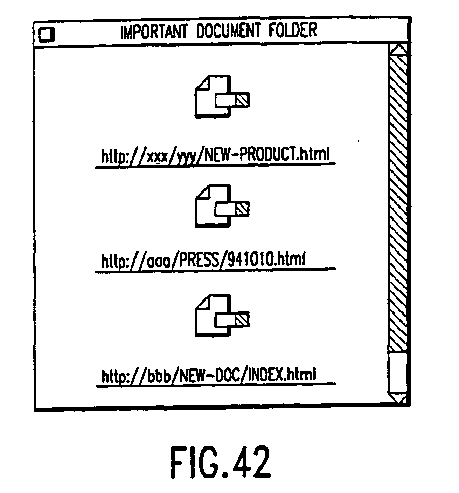

To utilize evaluation information, examples of creating new document data based on the content of the evaluation information, will now be described. Figs. 41 and 42 are diagrams for creating document data using the evaluation information. Fig. 41 illustrates taking a URL document with the evaluation "important" and the comment among the evaluation information of "engineering planning department", and creating the HTML document "link to important document." The URL is displayed as an anchor. Thereby, the corresponding document data can be accessed to by selecting the anchor.

Other methods such as a method where a comment is displayed as the anchor, can be used. Various display methods may be employed, including holding the URL of the document as an object of the document evaluation information, the title of a document, thereby displaying a list of titles as an anchor. Further, in Fig. 42, a method for displaying a list of the evaluation information not using figures as the document.

According to the second embodiment of the invention, it is not necessary to manage document data as an internal object to which a comment tag can be attached. Therefore, it is possible to attach a comment tag to document data, which exists in an external environment. Further, in addition to displaying the comment tag with the document data by specifying the document data, it is possible to retrieve the comment tag and obtain the referenced document data. Moreover, the document data can be created from the comment tag content.

According to the invention, the document management device can be capable of attaching additional information by a simple operation similar to attaching a memo, and managing the document by utilizing the additional information. In the document management device of the invention, the additional information is used in similar manner in the method of attaching a memo. Thus, the advantage of the memo-attaching method is provided. Additionally, the invention has the following advantages.

First, operation on a computer can be performed as in the paper references. The operation on the computer is easy to understand. A user need not know the registration to the database. In other words, by a simple operation of attaching a tag to the displayed document data, it is possible to select document data to be managed, define a viewpoint for evaluation, and register a document management data from the defined viewpoint. Further, the data for evaluation information can be input. Thereby, the evaluation information can be highly utilized using a computer. For example, it is made possible to create figures based on the evaluation information using the program creating figures. In addition, using the retrieval function makes it possible to select only evaluation information for a specific type among various evaluation information, given to a reference, and to combine different evaluation information.

Further, a user's own viewpoint can be freely defined by a structure of an evaluation information, thereby easily perform evaluation based on a definition. Other various effects can be realized such that information of various information sources can be managed based on own uniform viewpoint.

## Claims

1. A document management device comprising:
database means for storing and managing document data;
document retrieving means (28) for retrieving the document data from said database means (3);
format storage means (3) for storing at least one evaluation format each of which has an identifier and a plurality of definitions of evaluation attributes, said evaluation format specifying the structure of evaluation data representing evaluation for the document data;
a user interface comprising:
- document display means (22) for displaying at least one document data retrieved by said document retrieving means (28);
- document selecting means (29) for selecting one document data among the at least one document data displayed by said document display means (22);
- format selecting means (1) for selecting one of the evaluation formats stored in said format storage means (3); and
- at least one comment tag formatted according to the selected evaluation format, the comment tag including attribute value input means (1) for inputting attribute values, which are the result of evaluation for the document data selected by said document selecting means (29), from a viewpoint represented by the evaluation attributes defined in the evaluation format selected by said format selecting means (3);
evaluation data storage means (25) for storing the evaluation data separately from the document data, the evaluation data being a combination of the identifier of the evaluation format selected by said format selecting means (3) and attribute values inputted by said attribute value input means (1) for the evaluation attributes defined by the evaluation format;
binding information creating means (26) for creating binding information which binds the document data selected by said document selecting means (29) with the evaluation data stored in said evaluation data storage means (25) so that at least one comment tag containing the inputted attribute values is simultaneously displayed with the corresponding selected document data when the selected document data is subsequently displayed on the user interface; and
binding information storage means (29) for storing the binding information created by said information creating means (26).

2. A document management device according to claim 1, further comprising:
retrieval condition input means (30) for inputting in combination, the evaluation attribute and attribute value for the evaluation attribute, as retrieval conditions; and
document data retrieval means (28) for retrieving the document data, based on one or more retrieval conditions input by said retrieval condition input means (30), the evaluation data stored in said evaluation data storage means and the binding information can be stored in said information storage means (29).

3. A document management device according to any one of the preceding claims, wherein each document data has an inherent attribute attached to the document data, and said retrieval condition input means (30) inputs in combination an evaluation attribute, attribute value for the evaluation attribute and inherent attribute, as retrieval conditions.

4. A document management device according to any one of the preceding claims, further comprising evaluation data display means (22) for displaying evaluation data bound with the document data as a tag object that can indicate evaluation data according to a evaluation format specifying evaluation data, in a relatively close vicinity of the document data displayed by said document display means (22).

5. A document management device according to any one of the preceding claims, wherein said database means can be connected to a network, so said document retrieving means can access document data in said database through a network.

6. A document management device according to any one of the preceding claims, further comprising:
means for receiving a plurality of definitions of evaluation attributes that can be input by a user; and
evaluation format creating means for creating an evaluation format, in combination with definitions of evaluation attributes received and an identifier, and for storing the evaluation format in said format storage means (1).

7. A document management device according to any one of the preceding claims, wherein said information storage means (26) stores address information referring to document data selected by said document selecting means (29) to correspond to evaluation data, as binding information.

8. A document management device according to any one of the preceding claims, wherein said retrieval condition input means (38) can input evaluation attributes and attribute values for the evaluation attribute as retrieval conditions; the device further comprising:
evaluation data retrieval means (27) for retrieving evaluation data, which corresponds to retrieval conditions, from the evaluation data storage means (25); and
document data retrieval means for retrieving document data bound to retrieved evaluation data, based on binding information stored in said information storage means.

9. A document management method managing document data stored in a storage device (3), using a device according to any one of the preceding claims.

10. A method of managing document data stored in a storage device, the method comprising:
registering at least one evaluation format, each of which comprises an identifier and a plurality of definitions of evaluation attributes, said evaluation format specifying a structure of evaluation data representing evaluation for document data;
obtaining at least one document data from said storage device (3);
displaying the obtained document data on a user interface;
selecting, from the user interface, one document data from the displayed document data;
selecting, from the user interface, one evaluation format from said at least one registered evaluation format;
formatting at least one comment tag according to the selected evaluation format;
displaying the at least one comment tag on the user interface with the selected document data;
inputting, into at least one comment tag, attribute values which are the result viewpoint represented by the evaluation attributes defined by the selected evaluation format;
storing the selected evaluation data separately from the document data, the evaluation data being a combination of an identifier of the selected evaluation format and the inputted attribute values for the evaluation attributes defined by the selected evaluation format;
creating binding information which binds the selected document data with the stored evaluation data so that the at least one comment tag containing the inputted attribute values is simultaneously displayed with the corresponding selected document data when the selected document data is subsequently displayed on the user interface; and
storing the created binding information.

11. A document management method according to any one of claims 9 and 10, further comprising:
retrieving selected evaluation data from said stored evaluation data; and
retrieving selected document data bound to the retrieved evaluation data, based on said created binding information.

12. A document management method according to any one of claims 9, 10 and 11, further comprising registering address information for accessing selected document data in correspondence to the selected evaluation data.

## Patentansprüche

1. Dokumentenverwaltungsvorrichtung, enthaltend:
eine Datenbankeinrichtung zum Speichern und Verwalten von Dokumentdaten;
eine Dokumentenabrufeinrichtung (28) zum Abrufen der Dokumentdaten von der Datenbankeinrichtung;
eine Formatspeichereinrichtung (3) zum Speichern mindestens eines Bewertungsformats, von welchen jedes ein Identifizierungskennzeichen und eine Vielzahl von Definitionen von Bewertungsattributen hat, welches Bewertungsformat die Struktur von Bewertungsdaten festlegt, die die Bewertung für die Dokumentdaten darstellen;
eine Benutzerschnittstelle, enthaltend:
- eine Dokumentenanzeigeeinrichtung (22) zum Anzeigen von Daten mindestens eines Dokuments, die von der Dokumentenabrufeinrichtung (28) abgerufen wurden;
- eine Dokumentenauswahleinrichtung (29) zum Auswählen von Daten eines Dokuments aus den Daten des mindestens einen Dokuments, die von der Dokumentenanzeigeeinrichtung (22) angezeigt werden;
- eine Formatauswahleinrichtung (1) zum Auswählen eines der Bewertungsformate, die in der Formatspeichereinrichtung (3) gespeichert sind; und
- mindestens ein Kommentar-Tag, das gemäß dem ausgewählten Bewertungsformat formatiert ist, welches Kommentar-Tag Attributwerteingabeeinrichtungen (1) zum Eingeben von Attributwerten einschließt, die das Ergebnis der Bewertung der von der Dokumentenauswahleinrichtung (29) ausgewählten Dokumentdaten sind, von einem Standpunkt, der durch die Bewertungsattribute dargestellt ist, die in dem von der Formatauswahleinrichtung (3) ausgewählten Bewertungsformat definiert sind;
eine Bewertungsdatenspeichereinrichtung (25) zum Speichern der Bewertungsdaten getrennt von den Dokumentdaten, wobei die Bewertungsdaten eine Kombination des Identifizierungskennzeichens des Bewertungsformats, das von der Formatsauswahleinrichtung (3) ausgewählt wurde, und Attributwerten ist, die von der Attributwerteingabeeinrichtung (1) für die durch das Bewertungsformat definierten Bewertungsattribute eingegeben wurden;
eine Verbindungsinformationserzeugungseinrichtung (26) zum Erzeugen von Verbindungsinformationen, die die von der Dokumentenauswahleinrichtung (29) ausgewählten Dokumentdaten mit den in der Bewertungsdatenspeichereinrichtung (25) gespeicherten Bewertungsdaten verbinden, sodass mindestens ein Kommentar-Tag, das die eingegebenen Attributwerte enthält, gleichzeitig mit den entsprechenden ausgewählten Dokumentdaten angezeigt wird, wenn die ausgewählten Dokumentdaten nachfolgend an der Benutzerschnittstelle angezeigt werden; und
eine Verbindungsinformationenspeichereinrichtung (29) zum Speichern der von der informationserzeugungseinrichtung (26) erzeugten Verbindungsinformationen.

2. Dokumentenverwaltungsvorrichtung nach Anspruch 1, ferner enthaltend:
eine Abrufbedingungseingabeeinrichtung (30) zum Eingeben des Bewertungsattributs und des Attributwertes für das Bewertungsattribut in Kombination als Abrufbedingungen; und
eine Dokumentendatenabrufeinrichtung (28) zum Abrufen der Dokumentdaten basierend auf einer oder mehreren Abrufbedingungen, die von der Abrufbedingungseingabeeinrichtung (30) eingegeben werden, wobei die in der Bewertungsdatenspeichereinrichtung gespeicherten Bewertungsdaten und die Verbindungsinformationen in der Informationsspeichereinrichtung (29) gespeichert werden können.

3. Dokumentenverwaltungsvorrichtung nach einem der vorstehenden Ansprüche, bei welcher bei allen Dokumentdaten ein an den Dokumentdaten angebrachtes Eigenattribut vorhanden ist und die Abrufbedingungseingabeeinrichtung (30) in Kombination ein Bewertungsattribut, einen Attributwert für das Bewertungsattribut und das Eigenattribut als Abrufbedingungen eingibt.

4. Dokumentenverwaltungsvorrichtung nach einem der vorstehenden Ansprüche, ferner enthaltend eine Bewertungsdatenanzeigeeinrichtung (22) zum Anzeigen von Bewertungsdaten, die mit den Dokumentdaten verbunden sind, als Tag-Objekt, das die Bewertungsdaten gemäß einem die Bewertungsdaten spezifizierenden Bewertungsformat anzeigen kann, und zwar in relativ enger Nähe zu den von der Dokumentenanzeigeeinrichtung (22) angezeigten Dokumentdaten.

5. Dokumentenverwaltungsvorrichtung nach einem der vorstehenden Ansprüche, bei welcher die Datenbankeinrichtung mit einem Netz verbunden werden kann, sodass die Dokumentenabrufeinrichtung Dokumentdaten in der Datenbank durch ein Netz abrufen kann.

6. Dokumentenverwaltungsvorrichtung nach einem der vorstehenden Ansprüche, ferner enthaltend:
eine Einrichtung zum Empfangen einer Vielzahl von Definitionen von Bewertungsattributen, die von einem Benutzer eingegeben werden können; und
eine Bewertungsformaterzeugungseinrichtung zum Erzeugen eines Bewertungsformats in Kombination mit Definitionen von empfangenen Bewertungsattributen und einem Identifizierungskennzeichen, und zum Speichern des Bewertungsformats in der Formatspeichereinrichtung (1).

7. Dokumentenverwaltungsvorrichtung nach einem der vorstehenden Ansprüche, bei welcher die Informationsspeichereinrichtung (26) Adressinformationen, die auf von der Dokumentenauswahleinrichtung (29) ausgewählte Dokumentdaten verweisen, die Bewertungsdaten entsprechend, als Verbindungsinformationen speichert.

8. Dokumentenverwaltungsvorrichtung nach einem der vorstehenden Ansprüche, bei welcher die Abrufbedingungseingabeeinrichtung (38) Bewertungsattribute und Attributwerte für die Bewertungsattribute als Abrufbedingungen eingeben kann; welche Vorrichtung ferner enthält:
eine Bewertungsdatenabrufeinrichtung (27) zum Abrufen von Bewertungsdaten, die den Abrufbedingungen entsprechen, aus der Bewertungsdatenspeichereinrichtung (25); und
eine Dokumentendatenabrufeinrichtung zum Abrufen von Dokumentendaten, die mit den abgerufenen Bewertungsdaten basierend auf den in der Informationsspeichereinrichtung gespeicherten Verbindungsinformationen verbunden sind.

9. Dokumentenverwaltungsverfahren, das in einer Speichereinrichtung (3) gespeicherte Dokumentdaten unter Verwendung einer Vorrichtung gemäß einem der vorstehenden Ansprüche verwaltet.

10. Verfahren zum Speichern von in einer Speichereinrichtung gespeicherten Dokumentdaten, welches Verfahren enthält:
Registrieren mindestens eines Bewertungsformats, welche jeweils ein Identifizierungskennzeichen und eine Vielzahl von Definitionen von Bewertungsattributen enthält, welches Bewertungsformat eine Struktur von Bewertungsdaten festlegt, die eine Bewertung für Dokumentdaten darstellen;
Erhalten von Daten mindestens eines Dokuments aus der Speichereinrichtung (3);
Anzeigen der erhaltenen Dokumentdaten an einer Benutzerschnittstelle;
Auswählen von Daten eines Dokuments aus den angezeigten Dokumentdaten an der Benutzerschnittstelle;
Auswählen eines Bewertungsformats aus dem mindestens einen registrierten Bewertungsformat in der Benutzerschnittstelle;
Formatieren mindestens eines Kommentar-Tags gemäß dem ausgewählten Bewertungsformat;
Anzeigen des mindestens einen Kommentar-Tags an der Benutzerschnittstelle mit den ausgewählten Dokumentdaten;
Eingeben von Attributwerten, die das Ergebnis des Standpunkts sind, der durch die von dem ausgewählten Bewertungsformat definierten Bewertungsattribute dargestellt wird, in das mindestens eine Kommentar-Tag;
Speichern der ausgewählten Bewertungsdaten getrennt von den Dokumentdaten, wobei die Bewertungsdaten eine Kombination eines Identifizierungskennzeichens des ausgewählten Bewertungsformats und der eingegebenen Attributwerte für die Bewertungsattribute sind, die von dem ausgewählten Bewertungsformat definiert sind;
Erzeugen von Verbindungsinformationen, die die ausgewählten Dokumentdaten mit den gespeicherten Bewertungsdaten verbinden, sodass das mindestens eine Kommentar-Tag, das die eingegebenen Attributwerte enthält, gleichzeitig mit den entsprechenden ausgewählten Dokumentdaten angezeigt wird, wenn die ausgewählten Dokumentdaten nachfolgend an der Benutzerschnittstelle angezeigt werden; und
Speichern der erzeugten Verbindungsinformationen.

11. Dokumentenverwaltungsverfahren nach einem der Ansprüche 9 und 10, ferner enthaltend:
Abrufen von ausgewählten Bewertungsdaten aus den gespeicherten Bewertungsdaten; und
Abrufen von ausgewählten Dokumentdaten, die mit den abgerufenen Bewertungsdaten verbunden sind, basierend auf den erzeugten Verbindungsinformationen.

12. Dokumentenverwaltungsverfahren nach einem der Ansprüche 9, 10 und 11, ferner enthaltend das Registrieren von Adressinformationen für den Zugriff auf ausgewählte Dokumentdaten in Übereinstimmung mit den ausgewählten Bewertungsdaten.

## Revendications

1. Dispositif de gestion de documents comprenant :
un moyen formant base de données pour stocker et gérer des données de documents ;
un moyen de retrait (28) de document pour extraire les données de document dudit moyen formant base de données (3) ;
un moyen de stockage de format (3) pour stocker au moins un format d'évaluation ayant chacun un identificateur et une pluralité de définitions d'attributs d'évaluation, ledit format d'évaluation spécifiant la structure de données d'évaluation représentant une évaluation pour les données de document ;
une interface utilisateur comprenant :
- un moyen d'affichage (22) de document pour afficher au moins une donnée de document extraite par ledit moyen de retrait (28) de document ;
- un moyen de sélection (29) de document pour choisir une donnée de document parmi lesdites au moins une données de document affichées par ledit moyen d'affichage (22) de document ;
- un moyen de sélection de format (1) pour choisir l'un des formats d'évaluation stockés dans ledit moyen de stockage de format (3) ; et
- au moins une étiquette de commentaire formatée selon le format d'évaluation choisi, l'étiquette de commentaire incluant un moyen d'entrée de valeur d'attribut (1) pour saisir des valeurs d'attribut, qui sont le résultat de l'évaluation pour la donnée de document choisie par ledit moyen de sélection (29) de document, d'un point de vue représenté par les attributs d'évaluation définis dans le format d'évaluation choisi par ledit moyen de sélection de format (3) ;
un moyen de stockage de données d'évaluation (25) pour stocker les données d'évaluation séparément des données de documents, les données d'évaluation étant une combinaison de l'identificateur du format d'évaluation choisi par ledit moyen de sélection de format (3) et de valeurs d'attributs saisies par ledit moyen d'entrée de valeur d'attribut (1) pour les attributs d'évaluation définis par le format d'évaluation ;
un moyen de création d'information de liaison (26) pour créer une information de liaison qui lie la donnée de document choisie par ledit moyen de sélection (29) de document à la donnée d'évaluation stockée dans ledit moyen de stockage de données d'évaluation (25) de sorte qu'au moins une étiquette de commentaire contenant les valeurs d'attribut saisies est simultanément affichée avec la donnée de document choisie correspondante lorsque la donnée de document choisie est affichée ensuite sur l'interface utilisateur ; et
un moyen de stockage d'information de liaison (29) pour stocker l'information de liaison créée par ledit moyen de création d'information (26).

2. Dispositif de gestion de documents selon la revendication 1, comprenant en outre :
un moyen d'entrée de conditions de retrait (30) pour saisir de manière associée l'attribut d'évaluation et la valeur d'attribut pour l'attribut d'évaluation, en tant que conditions de retrait ; et
un moyen de retrait de données de document (28) pour extraire la donnée de document d'après une ou plusieurs condition(s) saisie(s) par ledit moyen d'entrée de conditions de retrait (30), les données d'évaluation stockées dans ledit moyen de stockage de données d'évaluation et l'information de liaison peuvent être stockées dans ledit moyen de stockage d'information (29).

3. Dispositif de gestion de documents selon l'une quelconque des revendications précédentes, dans lequel chaque donnée de document a un attribut inhérent attaché à la donnée de document, et ledit moyen d'entrée de conditions de retrait (30) saisie en association un attribut d'évaluation, une valeur d'attribut pour l'attribut d'évaluation et l'attribut inhérent comme conditions de retrait.

4. Dispositif de gestion de documents selon l'une quelconque des revendications précédentes, comprenant en outre un moyen d'affichage de données d'évaluation (22) pour afficher une donnée d'évaluation liée à la donnée de document en tant qu'objet étiquette qui peut indiquer la donnée d'évaluation en fonction d'une donnée d'évaluation spécifiant le format d'évaluation, dans un voisinage relativement proche de la donnée de document affichée par ledit moyen d'affichage de document (22).

5. Dispositif de gestion de documents selon l'une quelconque des revendications précédentes, dans lequel ledit moyen formant base de données peut être connecté à un réseau, de sorte que ledit moyen de retrait de document peut accéder à une donnée de document dans ladite base de données via un réseau.

6. Dispositif de gestion de documents selon l'une quelconque des revendications précédentes, comprenant en outre :
un moyen permettant de recevoir une pluralité de définitions d'attributs d'évaluation qui peuvent être saisies par un utilisateur ; et
un moyen de création de format d'évaluation pour créer un format d'évaluation, en combinaison avec les définitions d'attributs d'évaluation reçues et un identificateur, et pour mémoriser le format d'évaluation dans ledit moyen de stockage de format (1).

7. Dispositif de gestion de documents selon l'une quelconque des revendications précédentes, dans lequel ledit moyen de stockage d'informations (26) stocke une information d'adresse concernant la donnée de document sélectionnée par ledit moyen de sélection de document (29) pour correspondre à une évaluation de donnée, comme information de liaison.

8. Dispositif de gestion de documents selon l'une quelconque des revendications précédentes, dans lequel ledit moyen d'entrée de conditions de retrait (38) peut saisir des attributs d'évaluation et des valeurs d'attribut pour l'attribut d'évaluation en tant que conditions de retrait ; le dispositif comprenant en outre :
un moyen de retrait de données d'évaluation (27) pour extraire une donnée d'évaluation qui correspond à des conditions de retrait, du moyen de stockage de données d'évaluation (25) ; et
un moyen de retrait de données de document pour extraire une donnée de document liée à une donnée d'évaluation extraite, d'après une information de liaison mémorisée dans ledit moyen de stockage d'informations.

9. Procédé de gestion de documents qui gère des données de documents stockées dans un dispositif de stockage (3), en utilisant un dispositif conforme à l'une quelconque des revendications précédentes.

10. Procédé de gestion de documents stockés dans un dispositif de stockage, le procédé comprenant les étapes consistant à :
enregistrer au moins un format d'évaluation, chacun comprenant un identificateur et une pluralité de définitions d'attributs d'évaluation, ledit format d'évaluation spécifiant une structure de données d'évaluation représentant une évaluation pour une donnée de document ;
obtenir au moins une donnée de document dudit dispositif de stockage (3) ;
afficher les données de document obtenues sur une interface utilisateur ;
choisir, à partir de l'interface utilisateur, une donnée de document parmi les données de document affichées ;
choisir, à partir de l'interface utilisateur, un format d'évaluation parmi lesdits au moins un format d'évaluation enregistrés ;
formater au moins une étiquette de commentaire suivant le format d'évaluation choisi ;
afficher ladite au moins une étiquette de commentaire sur l'interface utilisateur avec la donnée de document choisie ;
entrer, dans au moins une étiquette de commentaire, des valeurs d'attribut qui sont le point de vue de résultat représenté par les attributs d'évaluation définis par le format d'évaluation choisi ;
stocker la donnée d'évaluation choisie séparément de la donnée de document, la donnée d'évaluation étant une combinaison d'un identificateur du format d'évaluation choisi et des valeurs d'attribut saisies pour les attributs d'évaluation définis par le format d'évaluation choisi ;
créer une information de liaison qui lie la donnée de document choisie à la donnée d'évaluation stockée de sorte que ladite au moins une étiquette de commentaire contenant les valeurs d'attribut saisies est affichée simultanément avec la donnée de document choisie correspondante quand la donnée de document choisie est affichée ensuite sur l'interface utilisateur ; et
stocker l'information de liaison créée.

11. Procédé de gestion de documents selon l'une quelconque des revendications 9 et 10, comprenant en outre les opérations consistant à :
extraire des données d'évaluation choisies desdites données d'évaluation stockées ; et
extraire des données de document choisies liées aux données d'évaluation extraites, d'après ladite information de liaison créée.

12. Procédé de gestion de documents selon l'une quelconque des revendications 9, 10 et 11, comprenant en outre le fait d'enregistrer une information d'adresse pour accéder à une donnée de document choisie en correspondance avec les données d'évaluation choisies.
